# EUROPÄISCHE PATENTANMELDUNG

(11) **EP 2 535 557 A2**
(43) Veröffentlichungstag der Anmeldung: **19.12.2012**
(21) Anmeldenummer: 12002864.2
(22) Anmeldetag: 24.04.2012
(51) Int. Cl.: F03B 13/14, F03B 15/12, F03B 15/16

(54) **Verfahren zum Betreiben eines Wellenenergiekonverters und Wellenenergiekonverter**

(30) Priorität: 17.06.2011 DE 102011105169
(71) Anmelder: Robert Bosch GmbH, 70469 Stuttgart (DE)
(72) Erfinder: Hoffmann, Norbert, 21423 Winsen (DE); Behrendt, Jasper, 22761 Hamburg (DE); Houis, Nicolas, 74321 Bietigheim-Bissingen (DE); Scharmann, Nik, 74321 Bietigheim-Bissingen (DE); Hagemann, Benjamin, 70839 Gerlingen (DE); Perschall, Markus, 63743 Aschaffenburg (DE); Poddey, Alexander, 71665 Vaihingen/Enz (DE); Thull, Daniel, 70599 Stuttgart (DE); Hilsch, Michael, 70192 Stuttgart (DE)
(74) Vertreter: Thürer, Andreas

(57) **Zusammenfassung**

Die Erfindung betrifft ein Verfahren zum Betreiben eines Wellenenergiekonverters (1, 10, 20, 30) zur Umwandlung von Energie aus einer Wellenbewegung eines Fluids in eine andere Energieform, mit wenigstens einem Rotor und wenigstens einem mit dem wenigstens einen Rotor gekoppelten Energiewandler (8), wobei durch die Wellenbewegung ein auf den wenigstens einen Rotor wirkendes erstes Drehmoment und durch den wenigstens einen Energiewandler (8) ein auf den wenigstens einen Rotor wirkendes zweites Drehmoment erzeugt wird, wobei eine erwünschte, senkrecht zu einer Rotationsachse des wenigstens einen Rotors wirkende Effektivkraft durch Einstellen des ersten und/oder zweiten Drehmoments eingestellt wird.

## Beschreibung

Die Erfindung betrifft ein Verfahren zum Betreiben eines Wellenenergiekonverters zur Umwandlung von Energie aus einer Wellenbewegung eines Fluids in eine andere Energieform und einen entsprechend betriebenen Wellenenergiekonverter.

### Stand der Technik

Zur Umwandlung von Energie aus Wellenbewegungen in Gewässern in nutzbare Energie sind aus dem Stand der Technik unterschiedliche Vorrichtungen bekannt, die auf hoher See oder in Küstennähe eingesetzt werden können. Eine Übersicht über Wellenenergiekraftwerke gibt beispielsweise G. Boyle, "Renewable Energy", 2. Aufl., Oxford University Press, Oxford 2004.

Unterschiede ergeben sich unter anderem in der Art, in der die Energie der Wellenbewegung entnommen wird. So sind auf der Wasseroberfläche schwimmende Bojen bzw. Schwimmkörper bekannt, durch deren Heben und Senken beispielsweise ein Lineargenerator angetrieben wird. Bei einem anderen Maschinenkonzept, dem sogenannten "Wave Roller", wird am Meeresboden ein flächiges Widerstandselement angebracht, das durch die Wellenbewegung hin und her gekippt wird. Die Bewegungsenergie des Widerstandselements wird in einem Generator beispielsweise in elektrische Energie umgewandelt. In derartigen oszillierenden Systemen kann allerdings nur ein maximaler Dämpfungs- bzw. Lastfaktor von 0,5 erreicht werden, so dass ihre Wirtschaftlichkeit in der Regel nicht zufriedenstellend ist.

Im Rahmen der vorliegenden Erfindung sind insbesondere Wellenenergiekonverter von Interesse, die im Wesentlichen unter der Wasseroberfläche angeordnet sind, und bei denen eine Kurbel- bzw. Rotorwelle durch die Wellenbewegung in Rotation versetzt wird.

Aus der Veröffentlichung von Pinkster et al., "A rotating wing for the generation of energy from waves", 22. International Workshop on Water Waves and Floating Bodies (IWWWFB), Plitvice, 2007, ist in diesem Zusammenhang ein Anlagenkonzept bekannt, bei dem der Auftrieb eines angeströmten Auftriebsläufers, also eines einen hydrodynamischen Auftrieb erzeugenden Kopplungskörpers, in eine Rotationsbewegung umgesetzt wird.

Ferner offenbart die US 2010/0150716 A1 ein System aus mehreren schnelllaufenden Rotoren mit Auftriebsläufern, bei dem die Rotorperiode kleiner als die Wellenperiode ist und eine separate Profilverstellung vorgenommen wird. Durch eine geeignete, jedoch nicht näher offenbarte Verstellung der Auftriebsläufer sollen resultierende Kräfte auf das System erzeugt werden, die für unterschiedliche Zwecke einsetzbar sind. Nachteilig an dem in der US 2010/0150716 A1 offenbarten System ist der Einsatz von schnelllaufenden Rotoren vom Voith-Schneider-Typ, die einen hohen Aufwand bei der Verstellung der Auftriebsläufer erfordern. Diese müssen kontinuierlich in einem nicht unbeträchtlichen Winkelbereich verstellt werden, um den jeweils an dem Auftriebsläufer vorherrschenden Anströmbedingungen angepasst zu werden. Zum Ausgleich der auf die Einzelrotoren wirkenden, aus Rotor- und Generatormoment resultierenden Kräfte sind zudem stets mehrere Rotoren in definierten Abständen zueinander erforderlich.

Der Erfindung liegt dementsprechend die Aufgabe zu Grunde, rotierende Wellenenergiekonverter, insbesondere im Sinne einer größeren Energieausbeute und eines geringeren konstruktiven und/oder steuerungstechnischen Aufwands, zu verbessern.

### Offenbarung der Erfindung

Vor diesem Hintergrund schlägt die vorliegende Erfindung ein Verfahren zum Betreiben eines Wellenenergiekonverters und einen entsprechend betreibbaren Wellenenergiekonverter mit den Merkmalen der unabhängigen Patentansprüche vor. Bevorzugte Ausgestaltungen sind Gegenstand der jeweiligen Unteransprüche sowie der nachfolgenden Beschreibung.

### Vorteile der Erfindung

Ein erfindungsgemäß vorgeschlagenes Verfahren wird zum Betreiben eines Wellenenergiekonverters mit wenigstens einem Rotor und wenigstens einem mit dem wenigstens einen Rotor gekoppelten Energiewandler verwendet, wobei durch die Wellenbewegung ein auf den wenigstens einen Rotor wirkendes erstes Drehmoment und durch den wenigstens einen Energiewandler ein auf den wenigstens einen Rotor wirkendes zweites Drehmoment erzeugt wird. Bei Verwendung eines doppelseitigen Rotors versteht sich, dass sich das "erste" Drehmoment aus den beiden "ersten" Drehmomenten, die auf jeder Seite des Rotors wirken, zusammensetzt. Erfindungsgemäß wird eine erwünschte, senkrecht zu einer Rotationsachse des wenigstens einen Rotors wirkende Effektivkraft durch Einstellen des ersten und/oder zweiten Drehmoments eingestellt. Hierdurch lässt sich, wie unten ausführlich erläutert, unter anderem ein entsprechender Wellenenergiekonverter auch mit nur einem Rotor betreiben, da dieser selbst etwaige auf ihn wirkende Momente senkrecht zur Rotationsachse oder überlagerte Kräfte ausgleichen kann und daher keine entgegen gerichtete Kraft eines zweiten oder weiteren Rotors benötigt wird.

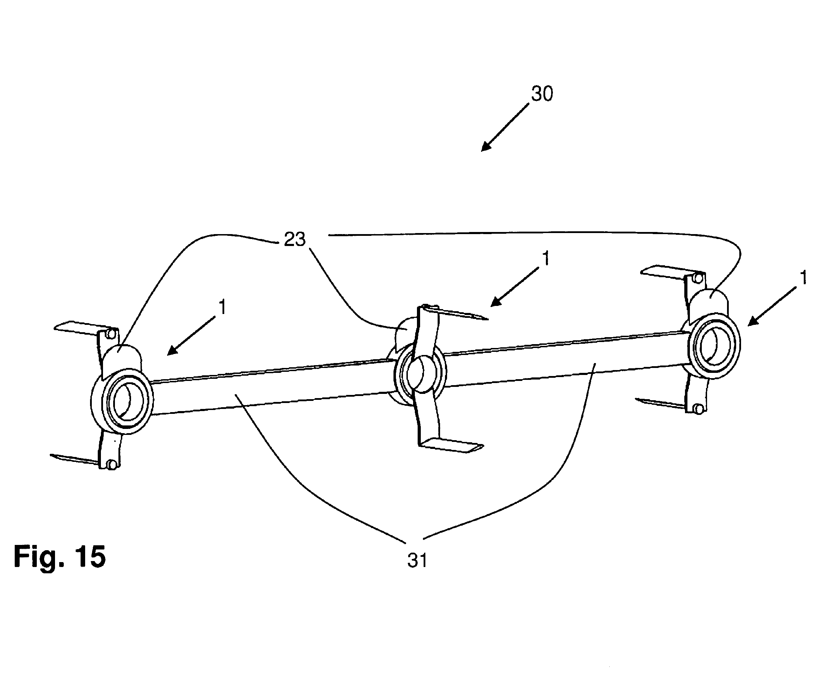

Die hier vorgestellte Erfindung betrachtet ganz allgemein Anlagen mit rotatorischem Wirkprinzip, z.B. auch Konverter mit mehreren Rotoren, wie z.B. in Figur 15 dargestellt. Die nachfolgenden Ausführungen gelten daher grundsätzlich für Wellenenergiekonverter mit einem oder mehreren Rotoren.

Insgesamt wird damit ein Wellenenergiekonverter mit wenigstens einem, wie unten erläutert, vorteilhafterweise synchron oder weitgehend synchron zu einer Wellen(orbital)bewegung bzw. -strömung rotierenden Rotor zur Wandlung von Energie aus einem welligen Gewässer bereitgestellt, der energetisch und steuerungstechnisch vorteilhaft ist, und bei dem zudem durch einen entsprechenden Betrieb bzw. eine entsprechende konstruktive Auslegung gezielt resultierende Kräfte beeinflusst und für eine Beeinflussung des Gesamtsystems nutzbar gemacht werden können. Mit einem derartigen Wellenenergiekonverter kann bei geeigneter Auslegung und Betriebsführung nahezu eine vollständige Auslöschung und damit Ausnutzung der einlaufenden Welle erreicht werden. Dies gilt insbesondere für monochromatische Wellen. Die Verstellung der in einem entsprechenden Wellenenergiekonverter verwendeten Auftriebsläufer, also von Kopplungskörpern, die dafür eingerichtet sind, eine Wellenbewegung in eine Auftriebskraft und damit in ein Drehmoment eines Rotors umzusetzen, muss aufgrund des synchronen oder weitgehend synchronen Betriebs nicht oder nur in einem geringen Umfang erfolgen, da eine Anströmung eines entsprechenden Profils hierbei über die gesamte Rotation des das Profil tragenden Rotors hinweg weitgehend aus einer gleichen Anströmrichtung erfolgt. Eine Anpassung eines Anstellwinkels γ, wie bei den bekannten Voith-Schneider-Rotoren (auch als Pitchen bezeichnet), ist daher nicht erforderlich, kann jedoch vorteilhaft sein.

In Meereswellen bewegen sich die Wasserpartikel auf weitgehend kreisförmigen sogenannten Orbitalbahnen (in Form einer Orbitalbewegung bzw. Orbitalströmung, wobei beide Begriffe auch synonym verwendet werden). Dabei bewegen sich die Wasserpartikel unter einem Wellenberg in Ausbreitungsrichtung der Welle, unter dem Wellental entgegen der Wellenausbreitungsrichtung und in den beiden Nulldurchgängen aufwärts bzw. abwärts. Die Strömungsrichtung an einem festen Punkt unter der Wasseroberfläche (nachfolgend als lokale bzw. momentane Anströmung bezeichnet) ändert sich also kontinuierlich mit einer bestimmten Winkelgeschwindigkeit O. Die Orbitalströmung ist im Tiefwasser weitgehend kreisförmig, im Flachwasser werden aus den kreisförmigen Orbitalen zunehmend flach liegende Ellipsen. Eine Strömung kann der Orbitalströmung überlagert sein.

Die Orbitalradien sind abhängig von der Tauchtiefe. Sie sind an der Oberfläche maximal - hier entspricht der Orbitaldurchmesser der Wellenhöhe - und nehmen mit zunehmender Wassertiefe exponentiell ab. Bei einer Wassertiefe von etwa der halben Wellenlänge kann daher nur noch ca. 5% der Energie gewonnen werden wie nahe der Wasseroberfläche. Getauchte Wellenenergiewandler werden deswegen vorzugsweise oberflächennah betrieben.

Vorteilhafterweise ist ein Rotor mit weitgehend horizontaler Rotorachse und mindestens einem Kopplungskörper vorgesehen. Der Rotor rotiert vorteilhafterweise synchron mit der Orbitalströmung mit einer Winkelgeschwindigkeit w und wird über den wenigstens einen Kopplungskörper von der Orbitalströmung angetrieben. Mit anderen Worten wird also durch die Wellenbewegung des Wassers, genauer durch seine Orbitalströmung, ein Drehmoment (im Rahmen dieser Erfindung als "erstes Drehmoment" oder "Rotor(dreh)moment" bezeichnet, erzeugt, das auf den Rotor wirkt. Stimmen die Periodendauer der Rotorrotationsbewegung und jene der Orbitalströmung, zumindest in einem gewissen Umfang, überein (zum hier verwendeten Begriff der "Synchronität" vgl. unten), so ergibt sich, abgesehen von dem erwähnten Tiefeneffekt sowie von Breiteneffekten bei großen Rotordurchmessern, am Kopplungskörper stets eine konstante lokale Anströmung. Hierdurch kann der Wellenbewegung kontinuierlich Energie entzogen und durch den Rotor in ein nutzbares Drehmoment gewandelt werden.

Unter dem Begriff "Kopplungskörper" sei in diesem Zusammenhang jede Struktur verstanden, durch die sich die Energie eines anströmenden Fluids in eine Rotorbewegung bzw. ein entsprechendes Rotormoment einkoppeln lässt. Kopplungskörper können, wie unten erläutert, insbesondere als Auftriebsläufer (auch als "Flügel" bezeichnet) ausgebildet sein, jedoch auch Widerstandsläufer umfassen.

Der Begriff der "Synchronität" kann dabei eine Rotorrotationsbewegung bezeichnen, aufgrund derer sich zu jedem Zeitpunkt eine vollständige Übereinstimmung zwischen der Lage des Rotors und der Richtung der lokalen Anströmung, die durch die Orbitalströmung zustande kommt, ergibt. Vorteilhafterweise kann eine "synchrone" Rotorrotationsbewegung aber auch derart erfolgen, dass sich zwischen der Lage des Rotors, bzw. wenigstens eines an dem Rotor angeordneten Kopplungskörpers, und der lokalen Anströmung ein definierter Winkel oder ein definierter Winkelbereich (d.h. der Phasenwinkel wird über ein Umdrehung innerhalb des Winkelbereichs gehalten) ergibt. Es ergibt sich daher ein definierter Phasenversatz bzw. Phasenwinkel Δ zwischen Rotorrotationsbewegung wind Orbitalströmung O. Die "Lage" des Rotors bzw. des wenigstens einen an dem Rotor angeordneten Kopplungskörpers ist dabei stets z.B. durch eine gedachte Linie durch die Rotorachse und bspw. die Drehachse oder den Schwerpunkt eines Kopplungskörpers definierbar.

Eine derartige Synchronität ist insbesondere für monochromatische Wellenzustände, d.h. Wellenzustände mit stets konstanter Orbitalströmung O, direkt ableitbar. Unter Realbedingungen, d.h. in realen Seegängen, in denen sich Orbitalgeschwindigkeit und -durchmesser durch wechselseitige Überlagerung von Wellen, durch wechselnden Windeinfluss und dergleichen, ändern (sogenannte multichromatische Wellenzustände), kann jedoch ebenfalls vorgesehen sein, dass die Maschine unter einem nur in einem gewissen Rahmen konstanten Winkel zur jeweiligen aktuellen Anströmung betrieben wird. Hierbei lässt sich ein Winkelbereich definieren, innerhalb dessen die Synchronität noch als eingehalten angesehen wird. Dies kann durch geeignete steuerungstechnische Maßnahmen unter Einbeziehung der Verstellung wenigstens eines Kopplungskörpers zur Erzeugung des erwähnten ersten Drehmoments und/oder eines bremsend oder beschleunigend wirkenden zweiten Drehmoments des Energiewandlers erreicht werden. Nicht alle Kopplungskörper müssen dabei notwendigerweise verstellt werden oder über eine entsprechende Verstellmöglichkeit verfügen. Insbesondere ist keine synchrone Verstellung mehrerer Kopplungskörper erforderlich.

Alternativ kann jedoch auch vorgesehen sein, dass auf eine vollständige Synchronität, bei der die Anströmung des wenigstens einen Kopplungskörpers lokal immer aus der gleichen Richtung erfolgt, verzichtet wird. Stattdessen kann der Rotor auf mindestens eine Hauptkomponente der Welle (z.B. eine Hauptschwingungsmode überlagerter Wellen) synchronisiert werden und damit zeitweise der lokalen Strömung vor- bzw. nacheilen. Dies kann durch eine entsprechende Anpassung des ersten und/oder zweiten Drehmoments erreicht werden. Auch ein derartiger Betrieb ist noch von dem Begriff "synchron" umfasst, ebenso wie eine Schwankung des Phasenwinkels in gewissen Bereichen, die dazu führt, dass der Rotor zwischenzeitlich eine Beschleunigung (positiv oder negativ) gegenüber der Wellenphase erfahren kann.

Die Drehzahl eines "synchronen" oder "weitgehend synchronen" Rotors stimmt daher in etwa, d.h. innerhalb bestimmter Grenzen, mit der jeweils aktuell vorherrschenden Wellendrehzahl überein. Abweichungen akkumulieren sich hierbei nicht, sondern werden weitgehend gegenseitig oder über die Zeit bzw. ein gewisses Zeitfenster ausgeglichen. Ein wesentlicher Aspekt eines Steuerungsverfahrens für einen entsprechenden Konverter kann darin bestehen, die erläuterte Synchronität zu erhalten.

Besonders bevorzugt werden Kopplungskörper aus der Klasse der Auftriebsläufer verwendet, die bei einer Anströmung unter einem Anströmungswinkel a neben einer Widerstandskraft in Richtung der lokalen Anströmung insbesondere eine im Wesentlichen senkrecht zur Anströmung gerichtete Auftriebskraft erzeugen. Dabei kann es sich beispielsweise um Auftriebsläufer mit Profilen gemäß dem NACA-Standard (National Advisory Committee for Aeronautics) handeln, die Erfindung ist jedoch nicht auf derartige Profile beschränkt. Besonders bevorzugt können Eppler-Profile zum Einsatz kommen. Bei einem entsprechenden Rotor ergibt sich die lokale Anströmung und der damit verknüpfte Anströmwinkel a dabei aus einer Überlagerung der Orbitalströmung v_{Welle} in der zuvor erläuterten lokalen bzw. momentanen Wellenanströmrichtung, der Rotationsgeschwindigkeit des Auftriebsläufers v_{Rotor} am Rotor und dem Anstellwinkel γ des Auftriebsläufers. Damit kann insbesondere durch eine Verstellung des Anstellwinkels γ des wenigstens einen Auftriebsläufers die Ausrichtung des Auftriebsläufers auf die lokal vorliegenden Anströmungsverhältnisse optimiert werden. Weiterhin sind auch eine Verwendung von Klappen ähnlich wie jene an Flugzeugflügeln und/oder eine Änderung der Auftriebsprofilgeometrie (sogenanntes "Morphing") zur Beeinflussung der Anströmung möglich. Die genannten Änderungen seien von der Formulierung "Formveränderung" umfasst.

Das erwähnte erste Drehmoment kann daher z.B. über den Anstellwinkel γ beeinflusst werden. Es ist bekannt, dass mit steigendem Anströmwinkel a die resultierenden Kräfte auf den Auftriebsläufer zunehmen, bis bei der sogenannten Stallgrenze, bei der ein Strömungsabriss erfolgt, ein Einbruch des Auftriebsbeiwerts zu beobachten ist. Die resultierenden Kräfte steigen ebenfalls mit zunehmender Strömungsgeschwindigkeit. Das bedeutet, dass über eine Änderung des Anstellwinkels γ und damit verbunden des Anströmwinkels a die resultierenden Kräfte und damit das auf den Rotor wirkende Drehmoment beeinflusst werden können.

Ein zweites auf den Rotor wirkendes Moment kann durch einen mit dem Rotor bzw. seiner Rotorbasis gekoppelten Energiewandler bereitgestellt werden. Dieses zweite Moment, nachfolgend auch als "Generatormoment" bezeichnet, wirkt sich ebenfalls auf die Rotationsgeschwindigkeit v_{Rotor} aus und beeinflusst damit ebenfalls den Anströmwinkel a. Das zweite Moment stellt im konventionellen Betrieb von Energieerzeugungsanlagen ein Bremsmoment dar, das durch die Wechselwirkung eines Generatorläufers mit dem zugehörigen Ständer zustande kommt und in elektrische Energie umgesetzt wird. Ein entsprechender Energiewandler in Form eines Generators kann jedoch zumindest während bestimmter Zeiträume auch motorisch betrieben werden, so dass das zweite Moment auch in Form eines Beschleunigungsmoments auf den Rotor wirken kann. Um die vorteilhafte Synchronität zu erreichen, kann das Generatormoment passend zur aktuellen Auftriebsprofileinstellung und den daraus resultierenden Kräften/Momenten so eingestellt werden, dass sich die gewünschte Rotationsgeschwindigkeit mit dem richtigen Phasenversatz zur Orbitalströmung einstellt. Eine Beeinflussung des Generatormoments kann u.a. durch Beeinflussung eines Erregerstroms durch den Läufer (bei fremderregten Maschinen) und/oder durch die Ansteuerung der Kommutierung eines dem Ständer nachgeschalteten Stromrichters erfolgen.

Aus den Kräften an den einzelnen Kopplungskörpern ergibt sich aus der vektoriellen Überlagerung schließlich eine Rotorkraft, die als senkrecht zur Rotorachse gerichtete Lagerkraft (auch als Reaktionskraft bezeichnet) auf das Gehäuse des Rotors wirkt. Diese ändert ihre Richtung kontinuierlich, da sich auch die Anströmung des Rotors und die Position der Kopplungskörper kontinuierlich ändern. Im zeitlichen Mittel ergibt sich bei einer gewollten oder ungewollten Asymmetrie der Lagerkraft über die Zeit eine Effektivkraft, die ebenfalls senkrecht zur Rotorachse wirkt und in Form einer translatorischen oder, bei mehreren Rotoren, als Kombination translatorischer Kräfte, eine Lage eines entsprechenden Wellenenergiekonverters beeinflussen und gezielt zur Lagebeeinflussung genutzt werden kann. Bei entsprechender Ausgestaltung der Kopplungskörper, z.B. bei schräger Anordnung ihrer Längsachsen, kann auch eine senkrecht zur Rotorachse gerichtete Lagerkraft erzeugt werden, wie an anderer Stelle näher erläutert.

Da der Rotor vorzugsweise als unter der Oberfläche eines welligen Gewässers schwimmendes System ausgeführt ist, wirkt die erläuterte Rotorkraft als verschiebende Kraft auf den Gesamtrotor und muss entsprechend abgestützt werden, wenn sich die Position des Rotors nicht verändern soll. Wie erwähnt, wird dies beispielsweise in der US 2010/0150716 A1 durch die Bereitstellung mehrerer Rotoren, deren Kräfte einander entgegenwirken, erzielt. Über eine Umdrehung kompensieren sich dabei die Verschiebungen, wenn von konstanten Anströmbedingungen an den Kopplungskörpern und gleichen Einstellungen der Anstellwinkel γ und damit des ersten Drehmoments und einem konstanten zweiten Drehmoment ausgegangen wird.

Durch eine geeignete Änderung der Rotorkraft durch Beeinflussung des ersten und/oder zeiten Drehmoments kann also unter Einhaltung der Synchronität auch erreicht werden, dass sich die Rotorkräfte pro Umdrehung nicht kompensieren, so dass bspw. eine Verschiebung des Rotors senkrecht zu seiner Rotationsachse erzielt werden kann.

Weist ein Rotor mehrere Kopplungskörper auf, so kann vorgesehen sein, dass jeder Kopplungskörper über eine eigene Verstellvorrichtung verfügt, so dass die Kopplungskörper unabhängig voneinander eingestellt werden können. Vorteilhaftweise werden die Kopplungskörper auf die jeweils lokal vorliegenden Strömungsbedingungen eingestellt. Dadurch können auch Tiefen- und Breiteneffekte ausgeglichen werden. Bei dem zuvor erläuterten "synchronen" Betrieb wird das Generatormoment dabei auf das durch die Summe der Kopplungskörper erzeugte Rotormoment abgestimmt.

Der Rotor kann eine beidseitige Lagerung für Kopplungskörper aufweisen, wobei ein Verstellsystem für den mindestens einen Kopplungskörper einseitig oder beidseitig vorgesehen sein kann. Alternativ ist eine Ausführung mit einer einseitigen Halterung des mindestens einen Kopplungskörpers und einem freien Ende vorgesehen.

Auch ein Rotor mit einer bezüglich seiner Rotationsebene zweiseitigen Rotorbasis, wobei an jeder Seite der Rotorbasis wenigstens ein Kopplungskörper angebracht ist, kann vorteilhafterweise zum Einsatz kommen. Hierdurch können insbesondere die auf einen mit dem Rotor gekoppelten Generator einwirkenden, in nutzbare Energie umsetzbaren Kräfte vergrößert werden uns es kann durch eine gezielte Beeinflussung von Effektivmomenten auf beiden Seiten der zweiseitigen Rotorbasis, wie bereits zum Teil erläutert, die Lage eines entsprechenden Wellenenergiekonverters gezielt gesteuert werden. Sind die auf beiden Seiten der zweiseitigen Rotorbasis wirkenden Kräfte unterschiedlich, kann ein senkrecht zur Rotationsachse des zweiseitigen Rotors wirkendes Drehmoment auf den Rotor erzeugt und damit eine Drehung des Wellenenergiekonverters bewirkt werden. Eine präzise Ausrichtung, z.B. zu einer Wellenausbreitungsrichtung, ist damit möglich. Nicht alle Kopplungskörper müssen hierbei notwendigerweise verstellbar ausgebildet sein, eine Verstellbarkeit nur eines Teils der Kopplungskörper reicht aus. In bestimmten Fällen kann auch auf eine Verstellbarkeit der Kopplungskörper vollständig verzichtet werden, so dass auch nur durch ein Generatormoment, wie unten erläutert, gezielt die jeweils wirkenden Kräfte beeinflusst werden können. Hierdurch ergibt sich eine besonders robuste Konstruktion und eine reduzierte Wartungsanfälligkeit, insbesondere in Anbetracht der rauen Bedingungen auf hoher See.

Zur Halterung des Rotors ist vorteilhafterweise ein Gehäuse vorgesehen, an dem dieser drehbar gehaltert ist. Das zweite Drehmoment wird vorzugsweise durch einen Energiewandler, wie einem Generator, realisiert. Dabei kann es sich insbesondere um einen direktgetriebenen Generator handeln, da hierbei Triebstrangverluste minimiert werden. Alternativ ist jedoch auch die Zwischenschaltung eines Getriebes möglich. Auch die Erzeugung eines Drucks in einem geeigneten Medium mit Hilfe einer Pumpe ist möglich. Dieser Druck stellt bereits eine nutzbare Energieform dar, er kann jedoch z.B. mit Hilfe eines Hydromotors (erneut) in ein Drehmoment gewandelt und in einen Generator gespeist werden.

Die Kopplungskörper können direkt oder indirekt über entsprechende Hebelarme mit dem Rotor des direktgetriebenen Generators verbunden sein. Vorteilhafterweise sind die Kopplungskörper also in einem Abstand zur Rotationsachse angebracht. Die Hebelarme können dabei als Streben bzw. entsprechend ausgebildete Beabstandungsmittel ausgebildet sein, die die Kopplungskörper mit dem Rotor verbinden, ein Hebelarm kann jedoch auch über eine entsprechende scheibenartige Struktur realisiert sein und nur die physikalische Funktion eines Hebels erfüllen. Je nach Ausgestaltung ergeben sich hierbei strömungstechnische oder konstruktive Vorteile.

Bei dem Verstellsystem zur Verstellung des mindestens einen Kopplungskörpers kann es sich, wie erwähnt, um ein System zur Änderung des Anstellwinkels γ handeln. Alternativ ist auch eine Verstellung von Klappen an dem mindestens einen Kopplungskörper ähnlich zu Flugzeugflügeln oder eine Änderung der Kopplungskörpergeometrie (Morphing) möglich. Die Verstellung kann elektromotorisch - vorzugsweise mit Schrittmotoren - und/oder hydraulisch und/oder pneumatisch erfolgen.

Alternativ oder zusätzlich zu einer Einzelverstellung für jeden Kopplungskörper kann eine gekoppelte Verstellung der verschiedenen Kopplungskörper vorgesehen sein, bei dem die Kopplungskörper beispielsweise über entsprechende Verstellhebel mit einer zentralen Verstelleinrichtung verbunden sind. Dies schränkt die Flexibilität der Maschine nur geringfügig ein, kann jedoch zu einer Vereinfachung des Gesamtaufbaus führen.

Bei der Geometrie der bevorzugt zum Einsatz kommenden Auftriebsläufer können reine extrudierte/prismatische Strukturen zum Einsatz kommen, bei denen sich der Kopplungskörperquerschnitt über die Kopplungskörperlänge nicht ändert. Es ist insbesondere für den Fall einer einseitigen Halterung erfindungsgemäß jedoch auch vorgesehen, 3D-Kopplungskörpergeometrie mit sich verjüngenden Kopplungskörperenden und/oder einer Pfeilung einzusetzen, wie sie auch im Flugzeugbau zum Einsatz kommen. Diese wirken sich positiv auf die Kopplungskörperstabilität/Biegelinie aus. Darüber hinaus führt eine Kopplungskörperverjüngung an der Kopplungskörperspitze zur Reduktion von Randwirbeln, die zu Effizienzverlusten führen können. Hier können zusätzlich auch noch Winglets an einem und/oder beiden Kopplungskörperenden zum Einsatz kommen.

Es kann vorgesehen sein, dass Länge und Winkellage des Hebelarms des mindestens einen Auftriebsläufers einstellbar ist, um die Maschine an verschiedene Wellenzustände, z.B. unterschiedliche Orbitalradien, anpassen zu können.

Es können Rotoren verwendet werden, bei denen die Kopplungskörper mit ihren Längsachsen weitgehend parallel zur Rotorachse ausgerichtet sind. Die Kopplungskörper können jedoch auch winkelig am Rotor angeordnet sein, wobei ihre Längsachsen zumindest zeitweise schräg zur Rotationsachse des Rotors laufen. Die Längsachsen können konvergieren oder divergieren oder seitlich zueinander versetzt angeordnet sein. Dabei kann die winkelige Anordnung sowohl die radiale als auch die tangentiale Ausrichtung betreffen. Dabei wirkt sich insbesondere eine die radiale Ausrichtung betreffende winkelige Anordnung des mindestens einen Kopplungsköpers in einem gewissen Grad stabilisierend auf die Anlagenperformance aus. So ergibt sich für verschiedene Wellenzustände ein verschiedener optimaler Kopplungskörperradius. Wie oben beschrieben, kann dieser einstellbar ausgeführt sein. Eine radial-winkelige Anordnung der Kopplungskörper führt hierbei insbesondere dazu, dass die Maschine über einen breiteren Bereich an Wellenzuständen in der Nähe eines Optimums betrieben werden kann. Die Gesamtanlage verhält sich also gewissermaßen toleranter und erlaubt einen Betrieb über einen größeren Bereich an Wellenzuständen, z.B. bei unterschiedlichen Orbitalradien. Zudem kann die Winkeligkeit einstellbar ausgebildet sein. Eine derartige Verstellbarkeit des Kopplungskörperwinkels ist unter Umständen einfacher zu realisieren als eine Änderung einer Hebelarmlänge.

Eine entsprechende winkelige Anordnung, insbesondere in Form divergierender oder konvergierender Kopplungskörper, kann auch dazu genutzt werden, um eine axiale Kraft auf einen betreffenden Rotor zu erzeugen, die neben einer zuvor erwähnten und nachfolgend noch genauer erläuterten Effektivkraft senkrecht zur Rotorachse zum Ausgleich anderer Kräfte oder zur Positionsveränderung eingesetzt werden kann.

Zur Steuerung des Wellenenergiekonverters bzw. des Rotors und der wirkenden Kräfte ist eine Steuerungseinrichtung vorgesehen. Diese nutzt als Steuergrößen das verstellbare zweite Drehmoment des mindestens einen Rotors und/oder das verstellbare erste Drehmoment, z.B. durch die Verstellung des mindestens einen Kopplungskörpers, also das erste Drehmoment. Neben den Maschinenzustandsgrößen mit Erfassung von Rotorwinkel und/oder Kopplungskörperverstellung kann das aktuell vorliegende lokale Strömungsfeld der Welle genutzt werden. Dieses kann mit entsprechenden Sensoren bestimmt werden. Dabei können diese Sensoren mitrotierend auf Teilen des Rotors und/oder auf dem Gehäuse und/oder unabhängig von der Maschine, vorzugsweise dieser vor- oder nachgelagert angeordnet sein. Eine lokale, regionale und globale Erfassung eines Strömungsfelds, einer Wellenausbreitungsrichtung, einer Orbitalströmung und dergleichen kann vorgesehen sein, wobei sich eine "lokale" Erfassung auf die unmittelbar an einer Komponente eines Wellenenergiekonverters vorherrschenden Bedingungen, eine "regionale" Erfassung auf Komponentengruppen oder eine Einzelanlage und eine "globale" Erfassung auf das Gesamtsystem oder einen entsprechenden Anlagenpark beziehen kann. Hierdurch kann eine prädiktive Messung und Vorhersage von Wellenzuständen vorgenommen werden. Messgrößen können beispielsweise die Strömungsgeschwindigkeit und/oder Strömungsrichtung und/oder Wellenhöhe und/oder Wellenlänge und/oder Periodendauer und/oder Wellenausbreitungsgeschwindigkeit und/oder Maschinenbewegung und/oder Haltemomente der Kopplungskörperverstellung und/oder Verstellmomente der Kopplungskörper und/oder das Rotormoment und/oder in ein Mooring eingeleitete Kräfte sein.

Vorzugsweise lassen sich aus den Messgrößen die aktuell vorliegenden Anströmverhältnisse am Kopplungskörper bestimmen, so dass dieser und/oder das zweite Drehmoment entsprechend eingestellt werden können, um die übergeordneten Regelziele zu erreichen.

Besonders bevorzugt ist jedoch vorgesehen, dass durch geeignete Messungen vorgelagert vor der Maschine oder einem Park aus mehreren Maschinen das gesamte sich ausbreitende Strömungsfeld bekannt ist. Durch geeignete Berechnungen kann damit die folgende lokale Anströmung an der Maschine bestimmt werden, wodurch eine besonders genaue Steuerung der Anlage ermöglicht wird. Mit derartigen Messungen wird es insbesondere möglich, eine übergeordnete Steuerung der Maschine, die sich beispielsweise auf eine Hauptkomponente der einlaufenden Welle ausrichtet, zu implementieren. Damit ist ein besonders robuster Maschinenbetrieb möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt einen Wellenenergiekonverter mit einem Rotor mit zwei Auftriebsläufern in einer Seitenansicht und veranschaulicht den Anstellwinkel γ und den Phasenwinkel Δ zwischen Rotor und Orbitalströmung.
- Figur 2: zeigt resultierende Anströmwinkel a₁ und a₂ und resultierende Kräfte an den Kopplungskörpern des Rotors aus Figur 1.
- Figur 3: veranschaulicht ein Verfahren zur Beeinflussung einer Effektivkraft anhand von Phasenwinkel-, Anstellwinkel-, Momenten- und Kraftverläufen.
- Figur 4: zeigt einen Wellenenergiekonverter mit einem Rotor in einer Seitenansicht mit großer radialer Ausdehnung mit unterschiedlicher Anströmung der Kopplungskörper und sich ergebende Kräfte.
- Figur 5: zeigt zwei Rotoren zur Wandlung von Energie aus einer Wellenbewegung mit scheibenförmigen Rotorbasen in perspektivischer Ansicht.
- Figur 6: zeigt einen Wellenenergiekonverter mit einem Rotor zur Wandlung von Energie aus einer Wellenbewegung mit Hebelarmen zur Anbringung von Kopplungskörpern in perspektivischer Ansicht.
- Figur 7: zeigt einen Wellenenergiekonverter mit einem Rotor zur Wandlung von Energie aus einer Wellenbewegung mit einer als Generatorläufer ausgebildeten Rotorbasis in perspektivischer Ansicht.
- Figur 8: zeigt Rotoren zur Wandlung von Energie aus einer Wellenbewegung mit schrägen Kopplungskörpern in perspektivischer Ansicht.
- Figur 9: zeigt einen weiteren Wellenenergiekonverter zur Wandlung von Energie aus einer Wellenbewegung mit schrägen Kopplungskörpern in einer Seitenansicht und einer Draufsicht.
- Figur 10: zeigt einen Wellenenergiekonverter mit einem Rotor zur Wandlung von Energie aus einer Wellenbewegung mit doppelseitiger Kopplungskörperanordnung in perspektivischer Ansicht.
- Figur 11: zeigt einen weiteren Wellenenergiekonverter mit einem Rotor zur Wandlung von Energie aus einer Wellenbewegung mit doppelseitiger Kopplungskörperanordnung in perspektivischer Ansicht.
- Figur 12: zeigt einen weiteren Wellenenergiekonverter mit einem Rotor zur Wandlung von Energie aus einer Wellenbewegung mit doppelseitiger Kopplungskörperanordnung in perspektivischer Ansicht.
- Figur 13: zeigt einen Wellenenergiekonverter mit einem Rotor zur Wandlung von Energie aus einer Wellenbewegung mit doppelseitiger Kopplungskörperanordnung an einer Haltestruktur in perspektivischer Ansicht.
- Figur 14: zeigt einen Wellenenergiekonverter mit einem Rotor zur Wandlung von Energie aus einer Wellenbewegung an einer Haltestruktur und mit einer Verankerungseinrichtung in einer Seitenansicht.
- Figur 15: zeigt mehrere Wellenenergiekonverter mit Rotoren zur Wandlung von Energie aus einer Wellenbewegung an einer Haltestruktur in perspektivischer Ansicht.
- Figur 16: zeigt mehrere Wellenenergiekonverter mit Rotoren zur Wandlung von Energie aus einer Wellenbewegung an einer Haltestruktur mit doppelseitiger Kopplungskörperanordnung in perspektivischer Ansicht.
- Figur 17: zeigt mehrere Wellenenergiekonverter mit Rotoren zur Wandlung von Energie aus einer Wellenbewegung an einer Haltestruktur mit teilweise doppelseitiger Kopplungskörperanordnung in perspektivischer Ansicht.
- Figur 18: veranschaulicht die Anordnung von Sensoren an und um einen Wellenenergiekonverter mit Rotor zur Wandlung von Energie aus einer Wellenbewegung an einer Haltestruktur in einer Seitenansicht.
- Figur 19: veranschaulicht mögliche Formveränderungen an Kopplungskörpern in perspektivischer Ansicht.

### Detaillierte Beschreibung der Zeichnungen

In den Figuren sind gleiche oder gleich wirkende Elemente mit identischen Bezugszeichen angegeben. Auf eine wiederholte Erläuterung wird der Übersichtlichkeit halber verzichtet.

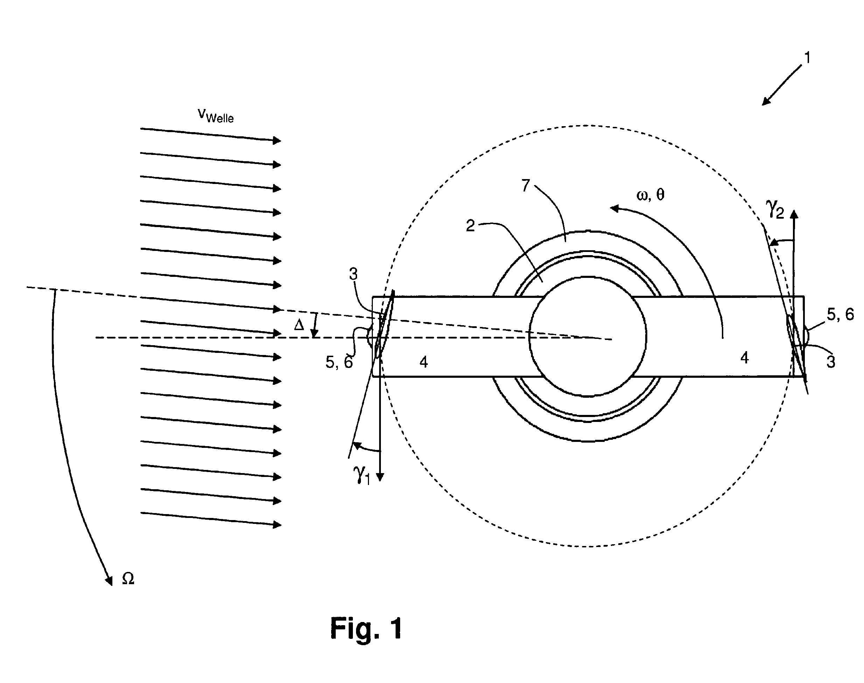

In Figur 1 ist ein Wellenenergiekonverter 1 mit einem Rotor 2,3,4 mit einer Rotorbasis 2, einem Gehäuse 7 und zwei jeweils über Hebelarme 4 drehfest an der Rotorbasis 2 befestigten Kopplungskörpern 3 dargestellt. Der Rotor 2,3,4 sei unterhalb der Wasseroberfläche eines welligen Gewässers - beispielsweise eines Ozeans - angeordnet. Seine Rotationsachse sei weitgehend horizontal und weitgehend senkrecht zur aktuellen Ausbreitungsrichtung der Wellen des welligen Gewässers orientiert. Die Kopplungskörper 3 sind im gezeigten Beispiel als Auftriebsprofile ausgeführt. Hierbei sollen Tiefwasserbedingungen vorliegen, bei denen die Orbitalbahnen der Wassermoleküle, wie erläutert, weitgehend kreisförmig verlaufen. Vorzugsweise sind die rotierenden Komponenten des Wellenenergiekonverters dabei mit einem weitgehend neutralen Auftrieb versehen, um eine Vorzugsposition zu vermeiden.

Die Kopplungskörper 3 sind als Auftriebsläufer ausgebildet und in einem Winkel von 180° zueinander angeordnet. Vorzugsweise sind die Auftriebsläufer in der Nähe ihres Druckpunktes gehaltert, um im Betrieb auftretende Rotationsmomente auf die Auftriebsläufer und damit die Anforderungen an die Halterung und/oder die Verstelleinrichtungen zu reduzieren.

Der radiale Abstand zwischen Aufhängungspunkt eines Kopplungskörpers und Rotorachse beträgt 1 m bis 50 m, vorzugsweise 2 m bis 40m, besonders bevorzugt 4 m bis 30 m und ganz besonders bevorzugt 5 m bis 20 m.

Zusätzlich dargestellt sind zwei Verstelleinrichtungen 5 zur Verstellung der Anstellwinkel γ₁ und γ₂ der Kopplungskörper 3 zwischen Flügelsehne und Tangente. Die beiden Anstellwinkel γ₁ und γ₂ sind vorzugsweise entgegengerichtet orientiert und weisen vorzugsweise Werte von -20° bis 20° auf. Insbesondere beim Anfahren der Maschine können jedoch auch größere Anstellwinkel vorgesehen sein. Vorzugweise können die Anstellwinkel γ₁ und γ₂ unabhängig voneinander verstellt werden. Bei den Verstelleinrichtungen kann es sich beispielsweise um elektromotorische Verstelleinrichtungen - vorzugsweise mit Schrittmotoren - und/oder um hydraulische und/oder pneumatische Komponenten handeln.

Die beiden Verstelleinrichtungen 5 können zudem jeweils eine Sensorik 6 zur Bestimmung der aktuellen Anstellwinkel γ₁ und γ₂ aufweisen. Eine weitere, nicht dargestellte Sensorik kann den Rotationszustand der Rotorbasis 2 bestimmen.

Der Wellenenergiekonverter 1 wird von der Orbitalströmung mit einer Anströmungsgeschwindigkeit v_{Welle} angeströmt. Dabei handelt es sich bei der Anströmung um die Orbitalströmung von Meereswellen, deren Richtung sich kontinuierlich ändert. Im dargestellten Fall ist die Drehung der Orbitalströmung entgegen dem Uhrzeigersinn orientiert, die dazugehörige Welle breitet sich also von rechts nach links aus. Im monochromatischen Fall ändert sich die Anströmungsrichtung dabei mit der Winkelgeschwindigkeit O = 2 p f = const., wobei f die Frequenz der monochromatischen Welle darstellt. In multichromatischen Wellen unterliegt O dagegen einer zeitlichen Änderung, O = *f*(t), da die Frequenz f eine Funktion der Zeit ist, f = *f*(t). Es ist vorgesehen, dass der Rotor 2,3,4 synchron zur Orbitalströmung der Wellenbewegung mit einer Winkelgeschwindigkeit w rotiert, wobei der Begriff der Synchronität in der zuvor erläuterten Weise zu verstehen ist. Hierbei gilt beispielsweise O ^{∼} w. Ein Wert oder ein Wertebereich für eine Winkelgeschwindigkeit w des Rotors wird also auf Grundlage einer Winkelgeschwindigkeit O der Orbitalströmung vorgegeben oder an diese angepasst. Hierbei kann eine konstante Regelung oder eine kurzzeitige bzw. kurzfristige Anpassung erfolgen.

Durch die Einwirkung der Strömung mit der Anströmungsgeschwindigkeit v_{Welle} auf die Kopplungskörper wird, wie unten näher erläutert, ein auf den Rotor 2,3,4 wirkendes erstes Drehmoment erzeugt. Vorgesehen ist darüber hinaus, dass auf den Rotor 2,3,4 ein vorzugsweise veränderbares zweites Drehmoment in Form eines Widerstands, also eines Bremsmoments, oder eines Beschleunigungsmoments aufbringbar ist. Mittel zur Erzeugung des zweiten Drehmoments sind zwischen der Rotorbasis 2 und dem Gehäuse 7 angeordnet. Vorzugsweise ist dabei vorgesehen, dass es sich bei dem Gehäuse 7 den Ständer eines direktgetriebenen Generators und bei der Rotorbasis 2 um den Läufer dieses direktgetriebenen Generators handelt, dessen Lagerung, Wicklungen etc. nicht dargestellt sind. Alternativ dazu können jedoch auch andere Triebstrangvarianten vorgesehen sein, bei denen die Mittel zur Erzeugung des zweiten Moments neben einem Generator auch noch ein Getriebe und/oder hydraulische Komponenten, wie zum Beispiel Pumpen, umfassen. Die Mittel zur Erzeugung des zweiten Moments können zusätzlich oder auch ausschließlich eine geeignete Bremse umfassen.

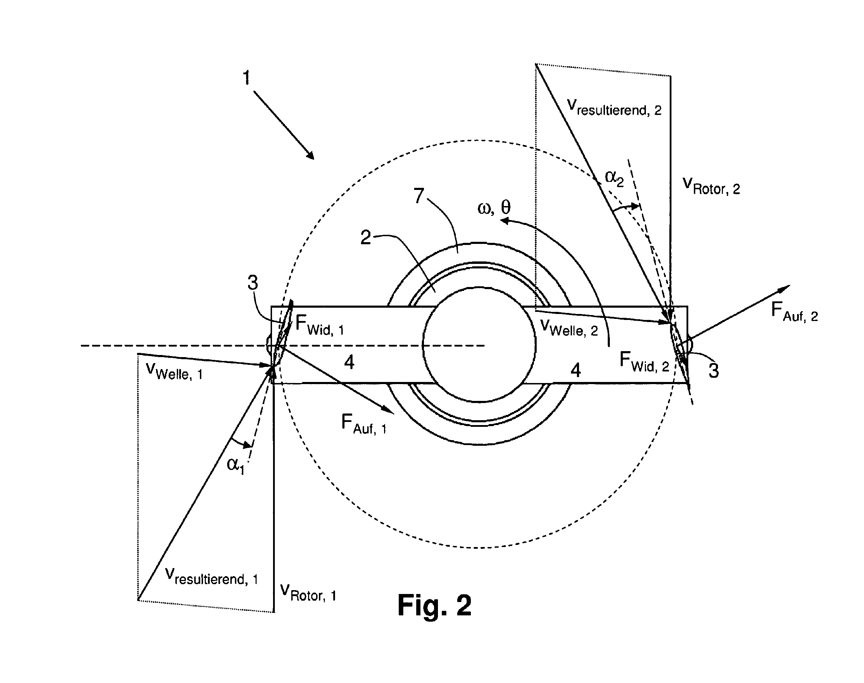

Zwischen der Rotororientierung, die durch eine untere gestrichelte Linie veranschaulicht ist, die durch die Rotorachse und die Mitte der beiden Verstelleinrichtungen 5 verläuft, und der Richtung der Orbitalströmung, die die durch eine obere gestrichelte Linie veranschaulicht ist, die durch einen der Geschwindigkeitspfeile v_{Welle} verläuft, besteht ein Phasenwinkel Δ, dessen Betrag durch die Einstellung des ersten und/oder des zweiten Drehmoments beeinflusst werden kann. Dabei erscheint ein Phasenwinkel von -45° bis 45°, vorzugsweise von -25° bis 25° und besonders bevorzugt von -15° bis 15° zur Erzeugung des ersten Drehmoments als besonders vorteilhaft, da hier bei die Orbitalströmung v_{Welle} und die Anströmung aufgrund der Eigenrotation v_{Rotor} (siehe Figur 2) weitgehend senkrecht zueinander orientiert sind, was zu einer Maximierung des Rotormoments führt. Unter Einhaltung der geforderten Synchronität gilt Δ ^{∼} const., wobei im Rahmen der Erfindung - wie bereits zuvor beschrieben - auch ein Pendeln um einen Mittelwert von Δ als synchron verstanden wird. Die Darstellung der Kopplungskörper in der Figur 1 und in den weiteren Figuren erfolgt nur beispielhaft zur Definition der unterschiedlichen Maschinenparameter. Vorzugsweise werden im Betrieb die Anstellwinkel der beiden Kopplungskörper entgegengesetzt zur Darstellung ausgeführt. Der in Figur 1 linke Kopplungskörper wäre dann nach innen verstellt und der in Figur 1 rechte Kopplungskörper nach außen.

In Figur 2 sind die sich ergebenden Anströmungsverhältnisse und die sich einstellenden Kräfte an den Kopplungskörpern, die zu einem Rotordrehmoment führen, dargestellt. Dabei wird vereinfachend davon ausgegangen, dass die Strömung über den gesamten Rotorquerschnitt gleichförmig ausgeprägt ist und einen gleichen Betrag und eine gleiche Richtung aufweist. Insbesondere für Rotoren mit großen Radialerstreckungen kann es jedoch dazu kommen, dass sich die verschiedenen Kopplungskörper 3 des Rotors 2,3,4 relativ zur Welle an unterschiedlichen Positionen befinden, was zu einer lokal verschiedenen Anströmungsrichtung führt. Dies kann jedoch beispielsweise mit Hilfe einer individuellen Einstellung des jeweiligen Anstellwinkels γ ausgeglichen werden.

An beiden Kopplungskörpern sind in Figur 2 die lokalen Anströmungen durch die Orbitalströmung (v_{Welle,i}) und durch die Eigenrotation (v_{Rotor,i}), die als Vektorsumme aus diesen beiden Anströmungen resultierende Anströmgeschwindigkeit (v_{resultierend,i}) sowie die sich ergebenden Anströmwinkel a₁ und a₂ dargestellt. Abgeleitet sind darüber hinaus die sich ergebenden Auftriebs- und Widerstandskräfte F_{Auf,i} und F_{wid,i} an beiden Kopplungskörpern, die sowohl vom Betrag der Anströmgeschwindigkeit als auch von den Anströmwinkeln a₁ und a₂ und damit auch von den Anstellwinkeln γ₁ und γ₂ abhängig sind und senkrecht bzw. parallel zur Richtung von v_{resultierend,i} orientiert sind.

Für den dargestellten Fall ergibt sich durch die beiden Auftriebskräfte F_{Auf,i} ein Rotordrehmoment entgegengesetzt dem Uhrzeigersinn und durch die beiden Widerstandskräfte F_{Wid,i} ein betragsmäßig kleineres Rotordrehmoment in entgegengesetzter Richtung (also im Uhrzeigersinn). Die Summe aus beiden Rotordrehmomenten führt zu einer Rotation des Rotors 1, deren Geschwindigkeit durch das Gegendrehmoment durch das verstellbare zweite Drehmoment eingestellt werden kann.

Wird die im Rahmen der Erfindung geforderte Synchronität mit Δ ^{∼} const. erreicht, so ist aus Figur 2 unmittelbar ersichtlich, dass für monochromatische Fälle, in denen der Betrag der Strömung v_{Welle,i} und die Winkelgeschwindigkeit O konstant bleiben, sich die Anströmbedingungen der beiden Kopplungskörper 3 über die Drehung des Rotors nicht ändern. Dies bedeutet, dass mit konstanten Anstellwinkeln γ ein konstantes Rotormoment erzeugt wird, das mit einem konstanten zweiten Drehmoment eines entsprechenden Generators abgegriffen werden kann.

Aus den an den Kopplungskörpern angreifenden Kräften ergibt sich neben einem Rotormoment auch eine resultierende Rotorkraft durch vektorielle Addition von F_{Auf,1}, F_{Wid,1}, F_{Auf,2} und F_{Wid,2}. Diese wirkt als Lagerkraft auf das Gehäuse und muss entsprechend abgestützt werden, wenn eine Verschiebung des Gehäuses unerwünscht ist. Während das Rotormoment bei Annahme gleicher Anströmbedingungen (v_{Welle,i}, Δ, O, ω, a₁, a₂, γ₁, γ₂ = const.) konstant bleibt, gilt dies für die resultierende Rotorkraft nur betragsmäßig. Aufgrund der sich ständig ändernden Strömungsrichtung der Orbitalströmung und der synchronen Rotordrehung ändert sich auch die Richtung der Rotorkraft entsprechend.

Neben einer Beeinflussung des Rotormoments durch eine Verstellung der Anstellwinkel γ und/oder eine Verstellung des Phasenwinkels Δ kann auch der Betrag dieser Rotorkraft durch eine Änderung der Anstellwinkel γ (wodurch sich die Anströmwinkel a ändern), durch eine Änderung der Rotorwinkelgeschwindigkeit w und/oder des Phasenwinkels Δ - beispielsweise durch Änderung des als zweiten Moments aufgebrachten Generatormoments (wodurch sich v_{Rotor} ändert) und/oder durch eine Kombination dieser Änderungen beeinflusst werden. Dabei wird vorzugsweise die in der Einleitung beschriebene Synchronität eingehalten.

Durch eine geeignete Verstellung dieser Stellgrößen pro Umdrehung und einer damit verbundenen Änderung der Rotorkraft kann der Wellenenergiekonverter in jede beliebige radiale Richtung bewegt werden. Hierbei sei angemerkt, dass die Darstellung in Figur 2 lediglich eine senkrecht zur Rotationsachse gerichteten Orbitalströmung umfasst, die keine Strömungskomponenten in Richtung der Zeichenebene aufweist. Wird im Gegensatz dazu, wie unter Realbedingungen der Fall, der Rotor schräg angeströmt, so ergibt sich eine Rotorkraft, die neben einer senkrecht zur Rotorachse gerichteten Kraftkomponente auch eine axiale Kraftkomponente aufweist. Diese rührt daher, dass die hydrodynamische Widerstandskraft eines Kopplungskörpers in Richtung der lokalen Anströmung gerichtet ist.

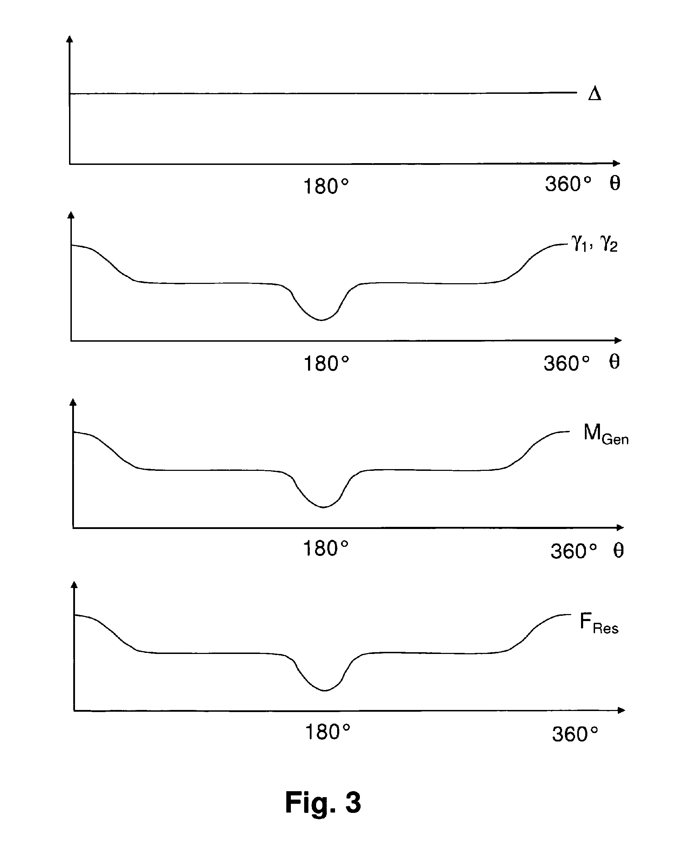

Ein mögliches Vorgehen zur Beeinflussung der Rotorkraft während einer Umdrehung ist qualitativ in Figur 3 dargestellt. Dabei wird angenommen, dass bei Einhaltung einer strikten Synchronität (Δ = const.) und, vereinfachend zunächst auch für monochromatische Wellenzustände, eine Verschiebung des Wellenenergiekonverters 1 aus Figur 1 in horizontaler Richtung nach rechts erreicht werden soll, dass der Rotor für θ = 0 von links angeströmt wird, und das die resultierende Rotorkraft in etwa in Anströmungsrichtung gerichtet ist. Für abweichende Richtungen der Rotorkraft kann das im Folgenden beschriebene Vorgehen in geeigneter Weise angepasst werden.

In den einzelnen Graphen der Figur 3 ist jeweils ein Phasenwinkel Δ, ein erster und ein zweiter Anstellwinkel γ₁ und γ₂, ein zweites Moment - hier als Generatormoment M_{Gen} dargestellt - und eine Effektivkraft F_{Res} über einen Phasenwinkel θ dargestellt.

Hierzu werden beispielsweise in einem Bereich von ca. 320° < θ <40° die resultierenden Kräfte an den Kopplungskörpern durch große Anstellwinkel γ maximiert, wodurch sich eine große resultierende Kraft auf den Rotor in Strömungsrichtung (nach rechts) ergibt. Um strikte Synchronität zu erreichen, wird das zweite Drehmoment in Form des Generatormoments in geeigneter Weise ebenfalls erhöht, da sich durch die großen Anströmwinkel a auch große Rotormomente ergeben, die ansonsten zu einer Beschleunigung des Rotors und damit zu einer Änderung des Phasenwinkels Δ führen würden. Für den Bereich von ca. 140° < θ < 220°, in dem die Anströmung von rechts erfolgt - die Rotorkraft ist damit weitgehend nach links gerichtet - werden diese Werte entsprechend reduziert, so dass die nach links gerichtete Kraft entsprechend geringer ausfällt. Für die dazwischen liegenden Bereiche mit Anströmungen von unten und von oben werden beide Werte auf einen mittleren Wert eingestellt, so dass sich hier die nach oben und unten gerichteten Kräfte über eine Umdrehung weitgehend aufheben. Insgesamt ergibt sich damit pro Umdrehung eine Verlagerung des Wellenenergiekonverters 1 um eine entsprechende Strecke nach rechts in horizontaler Richtung.

Zusammenfassend lässt sich festhalten, dass die Rotorkraft zweckmäßigerweise dann beeinflusst wird, wenn sie in bzw. entgegen zu der Richtung orientiert ist, in der zum Beispiel eine Verschiebung erreicht werden soll. Dabei können die beiden Anstellwinkel γ insbesondere zur Berücksichtigung von lokal abweichenden Strömungsverhältnissen (v_{Welle} kann insbesondere bei großen Rotorerstreckungen bzw. bei multichromatischen Strömungsbedingungen unterschiedlich sein) auch unabhängig voneinander in geeigneter Weise verändert werden, wobei das Generatormoment dann zur Erreichung von absoluter Synchronität in geeigneter Weise auf das jeweils resultierende Rotormoment abgestimmt wird. Dies kann Auswirkungen auf die Wirklinie der Rotorkraft haben und somit das Schwingungsverhalten des Rotors 1 beeinflussen.

Ein ähnlicher Effekt ergäbe sich, wenn in Figur 3 auf eine der beiden Änderungen verzichtet würde. Auch dann würde eine entsprechende Gesamtverschiebung des Systems, allerdings mit reduzierter Geschwindigkeit, erfolgen.

Ähnlich kann der Wellenenergiekonverter Maschine auch vertikal oder in beliebige Raumrichtungen senkrecht zur Rotorachse verschoben werden. Ein derartiges Verfahren kann auch dazu genutzt werden, der Orbitalströmung überlagerte Kräfte - beispielsweise durch Meeresströmungen o.ä. auszugleichen - und ein Abdriften der Maschine zu verhindern. Dies reduziert insbesondere auch die Anforderungen an die Verankerung. Ferner kann vorgesehen sein, die Erzeugung von gerichteten resultierenden Kräften zu nutzen, um das Gesamtsystem Maschine zu stabilisieren und/oder Kräfte auszugleichen.

Für multichromatische Wellenfälle ergibt sich ein ähnliches Verfahren, nur dass hierbei die Änderungen nicht periodisch erfolgen müssen, da sich die Strömungsrichtung nicht periodisch ändert. Durch geeignete Sensorik kann die aktuelle Strömungsrichtung - besonders bevorzugt übrigens die lokale Anströmung v_{Welle} der einzelnen Kopplungskörper 3 - jedoch detektiert werden, so dass eine entsprechende Steuerung/Regelung der Maschine zur Erzeugung von gerichteten resultierenden Kräften möglich ist.

Wird auf die Einhaltung einer absoluten Synchronität verzichtet und damit ein Schwanken das Phasenwinkels Δ um einen Mittelwert zugelassen, so kann eine Verschiebung des Rotors durch zyklische Beeinflussung der resultierenden Rotorkraft auch durch eine geeignete Verstellung nur entweder des ersten oder des zweiten Drehmoments erreicht werden.

Wird beispielsweise bei konstantem zweitem Drehmomentmindestens einer der beiden Anstellwinkel γ erhöht, so ergeben sich daraus höhere Kräfte F_{Auf} und F_{Wid} an dem mindestens einen der beiden Kopplungskörper 3 sowie damit verbunden der resultierenden Rotorkraft und ein größeres Rotormoment. Da das zweite Drehmoment konstant gehalten wird, führt dies zu einer Beschleunigung des Rotors und damit einer Änderung des Phasenwinkels Δ. Eine Verringerung der Anstellwinkel γ führt zu reduzierten Kräften und bei konstantem zweitem Drehmoment zu einer Abbremsung und damit zu einer Änderung des Phasenwinkels in gegenläufiger Richtung.

Ein Schwanken des Phasenwinkels Δ um einen Mittelwert Δ = 0° ist vorgesehen. Um diesen erweiterten Synchronitätsbegriff zu erfüllen, ist dabei vorgesehen, dass der Phasenwinkel Δ in einer Bandbreite zwischen -90° < Δ <90° variiert werden kann.

Sollte durch besondere Umstände im Betrieb ein Fall auftreten, in dem der Phasenwinkel Δ diese Vorgabe verletzte, so können die Anstellwinkel γ der Kopplungskörper in ihrem Vorzeichen vertauscht werden, so dass für das weitere Vorgehen wieder der zuvor genannte Phasenwinkel erreicht wird.

Durch geeignete Wahl der Änderungsintervalle über die Rotordrehung kann damit ebenfalls eine Positionsbeeinflussung durch gezielte Variation der resultierenden Rotorkraft nur durch Änderung der Anstellwinkel γ erreicht werden.

Gleiches gilt für eine Änderung des zweiten Moments bei konstanten Anstellwinkeln γ - also konstantem ersten Moment. Auch hierdurch ergibt sich eine Änderung des Phasenwinkels Δ und der Rotorkraft, die in geeigneter Weise variiert werden kann.

Vorteilhaft können auch Zwischenlösungen zwischen den beschriebenen Fällen mit der Verstellung nur eines der Drehmomente und einer gemeinsamen Verstellung beider Größen zur Beeinflussung der Rotorkraft bei gleichzeitiger Einhaltung der Synchronitätsanforderung sein. Insbesondere für reale multichromatische Seegänge werden sich im Realfall eher Mischzustände einstellen, wenn beide Größen beeinflusst werden.

Es ist damit möglich, auch bei Rotoren ohne einstellbare Anstellwinkel γ oder ohne einstellbares zweites Drehmoment die geforderte Synchronität, insbesondere auch für multichromatische Seegänge, einzuhalten. Hierbei kann ein Rotor mit fest eingestellten Anstellwinkeln γ verwendet werden, dessen Phasenwinkel Δ und/oder dessen Effektivkraft über eine Anpassung nur des zweiten Moments erfolgt. Vorteilhaft an diesem System ist die Reduktion der Systemkomplexität durch Entfall von aktiven Verstellelementen. Die Anstellwinkel γ werden hierbei vorzugsweise gegenläufig - der eine Kopplungskörper ist nach innen angestellt (gepitcht), während der andere Kopplungskörper nach außen gepitcht ist - (betragsmäßig) auf einen festen Wert von 0° bis 20°, vorzugsweise von 3° bis 15° und besonders bevorzugt von 5° bis 12° und ganz besonders bevorzugt von 7° bis 10° eingestellt.

Alternativ kann auch vorgesehen sein, dass nur einer der beiden Kopplungskörper über eine Verstelleinrichtung verfügt, während der andere Kopplungskörper 3 mit einem festen Anstellwinkel γ montiert ist.

Alternativ kann auch ein Rotor verwendet werden, bei dem das zweite Drehmomentkonstant auf einen mittleren Wert eingestellt ist, dessen Phasenwinkel Δ und/oder dessen Rotorkraft unter Einhaltung der geforderten Synchronität durch geeignete Änderung der Anstellwinkel γ erfolgt.

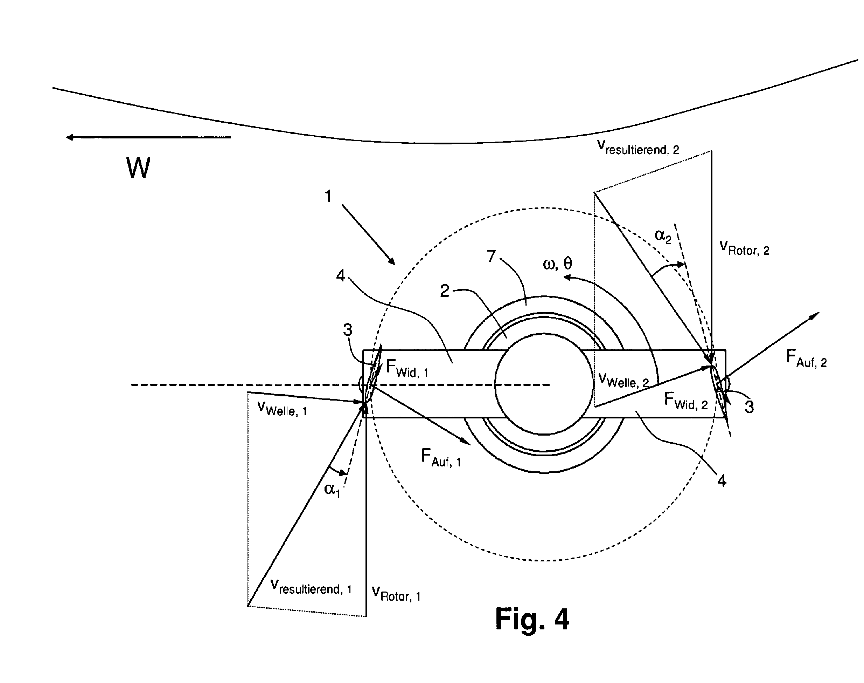

Zur Verdeutlichung des Effekts von großen Rotorerstreckungen im Vergleich zur Wellenlänge ist in Figur 4 ein Wellenenergiekonverter 1 dargestellt, bei dem der Durchmesser so groß ist, dass die Anströmungsrichtung v_{Welle} der beiden Kopplungskörper 3 unterschiedlich ausfällt. Dabei dreht der Rotor entgegen dem Uhrzeigersinn, die Wellenausbreitungsrichtung ist von rechts nach links orientiert und mit W bezeichnet. Unter dem Wellenminimum bewegen sich dabei die Wasserpartikel weitgehend horizontal von links nach rechts. Der linke Kopplungskörper ist noch etwas vor dem Minimum angeordnet, so dass v_{Welle,1} leicht nach unten weist und noch nicht vollständig horizontal orientiert ist (gleiche Anströmung wie in Figur 2).

Im Gegensatz hierzu ist das Minimum bereits an der Position des rechten Kopplungskörpers vorbeigezogen, so dass die Anströmung v_{Welle,2} hier bereits von schräg unten erfolgt. Dies führt zu geänderten Anströmverhältnissen mit einer anderen Anströmgeschwindigkeit v_{resultie-rend,2} und einem anderen Anströmwinkel a₂ als in Figur 2, bei der angenommen wurde, das die Anströmrichtung an beiden Kopplungskörpern identisch sei. Damit ändern sich auch Betrag und Wirkrichtung der beiden Kräfte F_{Auf,2} und F_{Wid,2} an diesem Kopplungskörper und dadurch auch die Rotorkraft und das Rotormoment entsprechend.

Ein ähnlicher Effekt ergibt sich durch die exponentielle Tiefenabhängigkeit der Strömungsgeschwindigkeit der Orbitalströmung. Bei vertikaler Orientierung des Rotors aus Figur 2 (Drehung um 90°) wird bei großen Rotorerstreckungen im Vergleich zur Wellenlänge der untere Kopplungskörper 3 mit geringeren Strömungsgeschwindigkeiten beaufschlagt, als der obere Kopplungskörper 3. Auch dieser Effekt wirkt sich entsprecht auf die Rotorkraft und das Rotormoment aus.

Beide Effekte können jedoch durch eine geeignete Anpassung der Anstellwinkels γ - also eine Einstellung des ersten Drehmoments - und des zweiten Drehmoments in geeigneter Weise genutzt bzw. kompensiert werden, um auch unter derartigen Bedingungen weiterhin Synchronität zu gewährleisten und/oder die Rotorkraft in geeigneter Weise zu beeinflussen. Für den Fall großer Rotorradien mit ungleicher Anströmung der Kopplungskörper wird der Phasenwinkels Δ als Winkel zwischen der Verbindungslinie des der Orbitalströmung zugewandten Kopplungskörpers 3 und dem Rotationszentrum und der radialen Anströmungsrichtung des Rotorzentrums definiert.

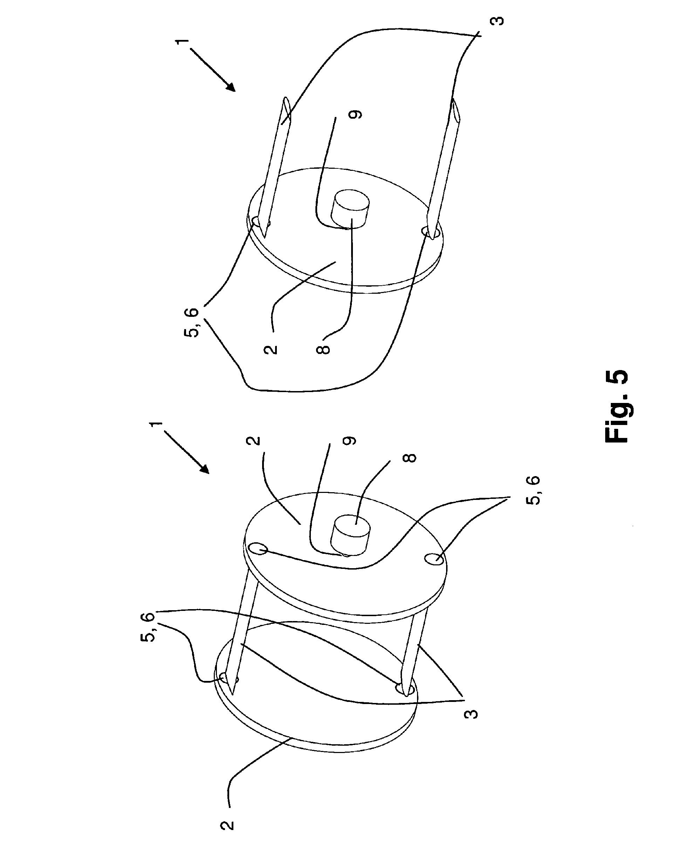

In Figur 5 sind zwei Ausführungsformen des Wellenenergiekonverters 1 dargestellt. Diese weisen jeweils zwei Kopplungskörper 3 auf, die ein- oder beidseitig an einer Rotorbasis 2 gelagert sind. Die Kopplungskörper können mit einem Verstellsystem 5 ausgestattet sein, das zur aktiven Verstellung des Anstellwinkels γ der Kopplungskörper dient. Bei beidseitiger Lagerung der Kopplungskörper kann die zweite Seite drehbar gelagert sein, alternativ ist aber auch eine beidseitige Anbringung eines Verstellsystems 5 möglich. Zusätzlich können Sensoren 6 zur Bestimmung des Anstellwinkels γ vorgesehen sein. Ein nicht dargestellter Sensor zur Bestimmung der Drehposition θ der Rotorbasis 2 kann ebenfalls vorgesehen sein.

An der Rotorbasis 2 greift an einer Rotorwelle 9 ein Energiewandler 8 an, der beispielsweise einen direktgetriebenen Generator enthalten kann.

Im Rahmen dieser Schrift werden Rotoren, bei denen der oder die Kopplungskörper nur auf einer Seite der Rotorbasis 2 angeordnet sind, unter dem Oberbegriff einseitige Rotoren zusammengefasst. Doppelseitige Rotoren weisen entsprechend eine bezüglich ihrer Rotationsebene zweiseitige Rotorbasis 2 auf, wobei an jeder Seite der zweiseitigen Rotorbasis 2 wenigstens ein Kopplungskörpers angebracht ist.

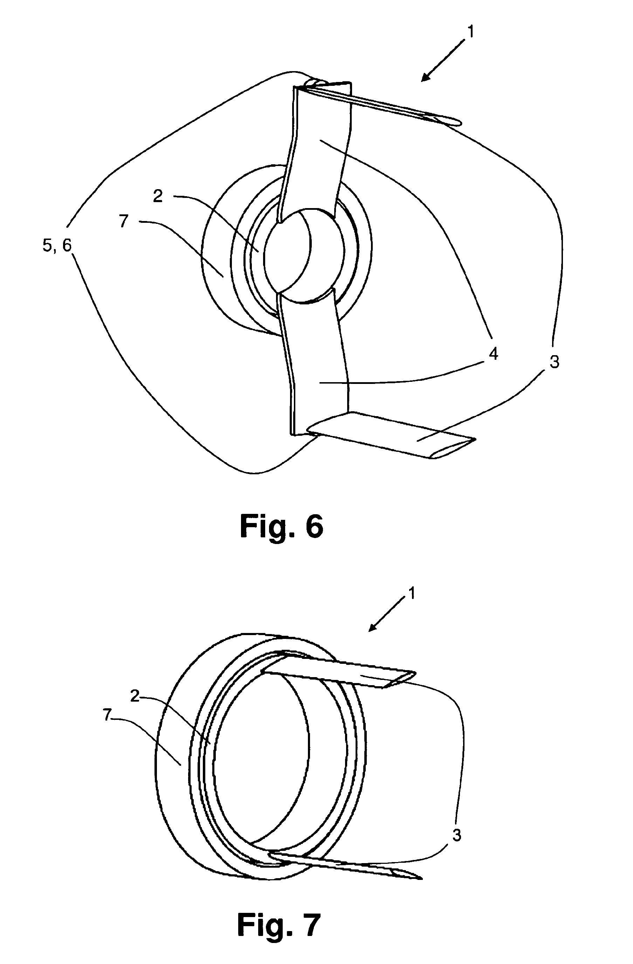

Figur 6 zeigt in perspektivischer Darstellung einen Wellenenergiekonverter 1 mit einseitigem Rotor, bei dem die Kopplungskörper 3 über Hebelarme 4 an einer in einem Gehäuse 7 gelagerten Rotorbasis 2 gehaltert sind. Dabei kann vorteilhafterweise vorgesehen sein, dass es sich bei dem Gehäuse 7 und der Rotorbasis 2 um Ständer und Läufer eines direktgetriebenen Generators handelt. Eine Rotorwelle 9 wie in Figur 6 ist hier nicht mehr enthalten, was zu Einsparungen an Strukturkosten führt. Die Länge der Hebelarme 4 kann einstellbar ausgeführt sein.

In Figur 7 ist ein alternativer Wellenenergiekonverter 1 mit einseitigem Rotor 2,3 dargestellt, bei dem die Kopplungskörper 3 direkt an eine als Läufer eines direktgetriebenen Generators ausgeführte Rotorbasis 2 angekoppelt sind. Verstellsysteme zur Verstellung der Kopplungskörper 3 und Sensoren zur Zustandsüberwachung/Lagebestimmung sind nicht dargestellt, können jedoch vorgesehen sein. Auch hier wird auf eine Welle 9 verzichtet.

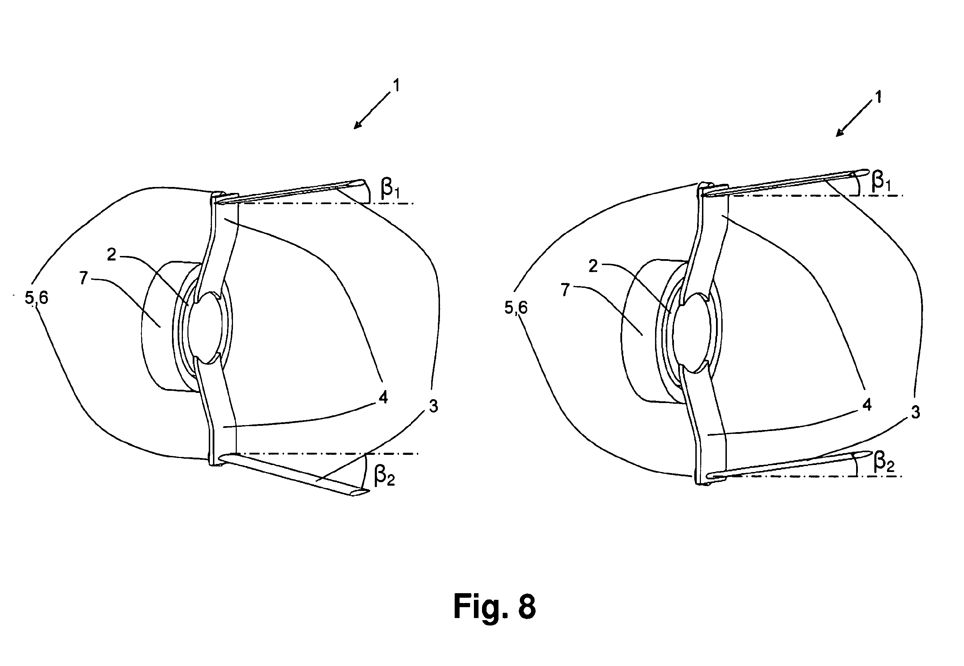

Figur 8 zeigt einen weiteren Wellenenergiekonverter 1 mit Rotor 2,3,4 mit Kopplungskörpern 3, bei dem die Kopplungskörper 3 nicht parallel zur Rotationsachse des Rotors 1 orientiert sind, sondern eine Verkippung in radialer Richtung aufweisen, so dass sich gegenüber der Rotorachse Winkel ß₁ und ß₂ einstellen. Diese Verkippung kann für jeden Kopplungskörper 3 anders ausgeführt und unabhängig einstellbar sein und der evtl. vorhandenen Verstellung des Anstellwinkels γ überlagert sein.

Ein Vorteil einer derartigen Kopplungskörperverstellung liegt in einem breitbandigeren Maschinenverhalten. So ist eine Maschine mit parallel zur Rotationsachse angeordneten Kopplungskörpern optimal für einen bestimmten Wellenzustand mit einer entsprechenden Wellenhöhe und Periodendauer ausgelegt und kann diese Welle im Idealfall optimal auslöschen. In der Realität treten jedoch sehr unterschiedliche Wellenzustände auf, insbesondere auch (mehrfache) Überlagerungen verschiedener Wellenzustände.

Der Rotor 1 gemäß Figur 7 vereint dabei quasi verschiedene Maschinenradien in einer Maschine, so dass ein Teil des Rotors immer optimal für den aktuellen Wellenzustand ausgelegt ist. Insbesondere in Kombination mit einer Verstellmöglichkeit für diesen Winkel ergibt sich damit ein besonders vorteilhafter Rotor mit überlegenen Eigenschaften.

Wie in Figur 8 links dargestellt, besteht zudem die Möglichkeit, sämtliche Kopplungskörper 3 nach außen zu verstellen, oder, in Figur 8 rechts, die Verstellung vorzugsweise gegenläufig vorzunehmen, wie dies auch für die Anstellwinkel γ vorgesehen ist. Nicht dargestellt ist die dritte Möglichkeit, bei der die Kopplungskörper alle nach innen verstellt sind, diese kann jedoch ebenfalls vorteilhaft sein.

Durch eine in radialer Richtung verkippte Verstellung der Kopplungskörper kann zudem vorteilhafterweise Einfluss auf die Richtung der Rotorkraft bzw. Effektivkraft genommen werden. Da die hydrodynamische Auftriebskraft senkrecht zur lokalen Anströmung orientiert ist, ergibt sich durch eine Verstellung des Kopplungskörpers in radialer Richtung neben einer senkrecht zur Rotationsachse gerichteten Rotorkraftkomponente auch eine axiale Rotorkraftkomponente. Diese kann vorteilhaft zur Stabilisierung und/oder Bewegung des Rotors genutzt werden.

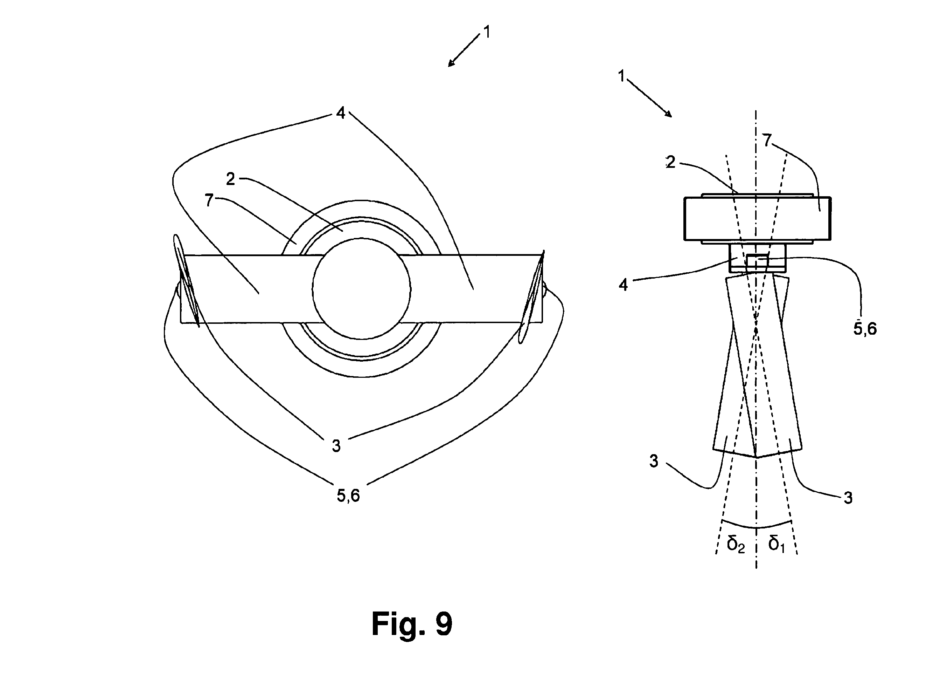

In Figur 9 sind zwei Ansichten einer weiteren Möglichkeit dargestellt, bei der die Kopplungskörper 3 nicht parallel zur Rotationsachse verlaufen. Hier ergibt sich eine axiale Verkippung , so dass sich gegenüber der Rotorachse Winkel d₁ und d₂ einstellen, die über entsprechende Verstelleinrichtungen 5 einstellbar ausgeführt sein kann. Eine derartige Verkippung entspricht in gewissem Umfang einer Pfeilung, wie sie bei Flugzeugflügeln ebenfalls zum Einsatz kommt, wodurch die entsprechenden und an sich bekannten Vorteile erzielt werden können.

Vorteilhafterweise ist auch eine Kombination der in den Figuren 8 und 9 dargestellten Abweichungen der Kopplungskörperorientierung von einer rotationsachsenparallelen Ausrichtung insbesondere überlagert zum Anstellwinkel γ der Kopplungskörper 3 vorgesehen.

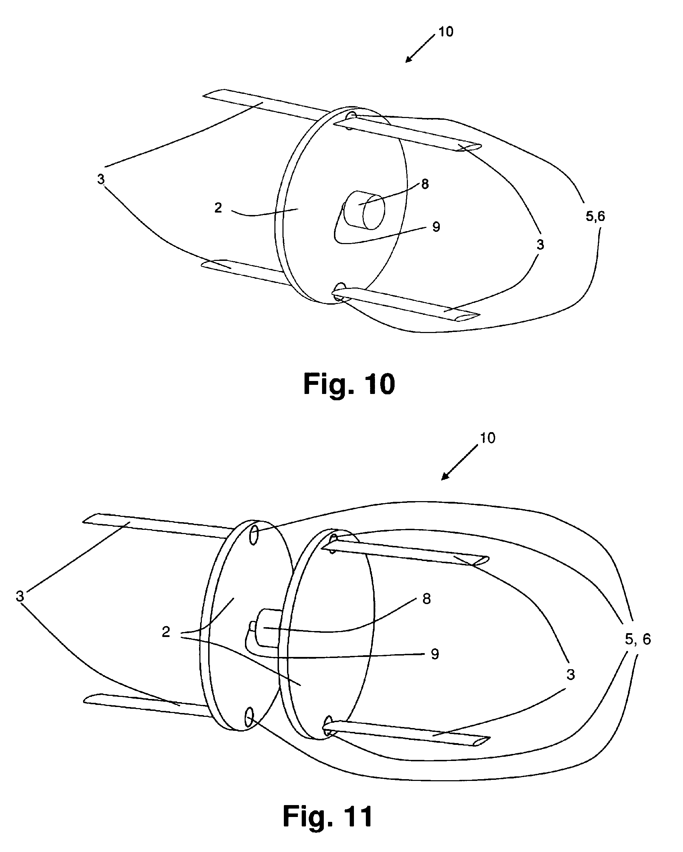

In Figur 10 ist eine besonders bevorzugte Ausgestaltung eines Wellenenergiekonverters 10 mit Rotor dargestellt. Dieser zeichnet sich dadurch aus, dass an der Rotorbasis 2 beidseitig Kopplungskörper 3 angeordnet sind. Wie erwähnt, werden derartige Rotoren mit dem Begriff "beidseitiger Rotor" bezeichnet. Auf diesen Wellenenergiekonverter mit beidseitigem Rotor können die zuvor in den Erläuterungen zu den Figuren 1 bis 9 genannten Eigenschaften und Ausprägungen einzeln oder in Kombination angewandt und übertragen werden. Dies bedeutet, dass ein Anstellwinkel γ jedes Kopplungskörpers 3 und/oder der Widerstand und/oder der Phasenwinkel Δ einstellbar sein können, dass die Betriebsführung auf (weitgehende) Synchronität ausgerichtet ist, und/oder dass durch geeignete Verstellung der Anstellwinkel γ, ß und/oder d und/oder des zweiten Drehmoments und/oder des Phasenwinkels Δ die resultierende Rotorkraft über die Rotordrehung so variiert werden kann, dass sich eine resultierende Kraft ergibt, die für eine Verschiebung des Wellenenergiekonverters und/oder zum Ausgleich von überlagerten Kräften, wie zum Beispiel durch Strömungen, und/oder für eine gezielte Schwingungsanregung und/oder Stabilisierung des Wellenenergiekonverters genutzt werden kann.

Vorteilhafterweise kann zudem vorgesehen sein, dass die freien Enden der Kopplungskörper jeweils in einer gemeinsamen Basis gelagert sind, wie dies für einen einseitigen Rotor in Figur 5 dargestellt ist.

Ist die Wellenausbreitungsrichtung einer monochromatischen Welle senkrecht zur Rotationsachse des Rotors gerichtet, so führt dies dazu, dass die jeweils paarweise nebeneinander angeordneten Kopplungskörper im Idealfall absolut identische Anströmungsbedingungen erfahren. Für diesen Fall können die Anstellwinkel γ dieser nebeneinander angeordneten Kopplungskörper vorzugsweise identisch eingestellt. Ergibt sich im realen Betriebsfall eine abweichende Anströmung der beiden Rotorhälften, so kann der Anstellwinkel jedes Kopplungskörpers 3 individuell so eingestellt werden, dass sich die lokale Anströmung optimal ausprägt.

Dabei ergibt sich aus der Überlagerung der Kräfte aller Kopplungskörper 3 ein Rotormoment und eine Rotorkraft, die jeweils von den lokalen Anströmungsbedingungen abhängen und die durch Anpassung der Anstellwinkel γ, β und/oder d und/oder des Widerstands kontinuierlich geändert werden können. Damit können auch für einen derartigen Wellenenergiekonverter mit beidseitigem Rotor im Zusammenhang mit Figur 3 erläuterten (Teil-) Synchronitätsbedingungen und die Erzeugung von resultierenden Kräften umgesetzt werden.

Gegenüber einem Wellenenergiekonverter 1 mit einseitigem Rotor gemäß den vorigen Abbildungen kann mit einem Wellenenergiekonverter 10 mit beidseitigem Rotor auch eine Rotation des Wellenenergiekonverter 10 um eine Achse erreicht werden, die senkrecht zur Rotorachse orientiert ist. Hierbei kann der Wellenenergiekonverter 10 im Betrieb durch unterschiedliche Beeinflussung der Anstellwinkel γ, β und/oder d der Kopplungskörper 3 und/oder durch Anpassung des Widerstands um seine vertikale Achse gedreht werden. Das kann besonders vorteilhaft dazu genutzt werden, den Wellenenergiekonverter 10 so auszurichten, dass seine Rotorachse weitgehend senkrecht zur aktuell vorliegenden Wellenausbreitungsrichtung orientiert ist.

Dazu können die im Zusammenhang mit Figur 3 erläuterten Strategien zur Erzeugung von gerichteten resultierenden Kräften auf diesen Wellenenergiekonverter 10 mit beidseitigem Rotor derart übertragen werden, dass die beiden Rotorseiten beispielsweise entgegengerichtet gesteuert/geregelt werden. Mögliche Strategien zur Drehung eines Wellenenergiekonverters mit beidseitigem Rotor um die vertikale Achse sind für den Fachmann direkt ableitbar.

Figur 11 zeigt eine weitere Ausgestaltung eines Wellenenergiekonverters 10 mit beidseitig angeordneten Kopplungskörpern 3. Bei dieser ist die Rotorbasis 2 in zwei (Teil-)Rotorbasen 2 mit dazwischen angeordneter Rotorwelle 9 und einem an diesem angeordneten Energiewandler 8, der beispielsweise einen Generator und/oder ein Getriebe enthalten kann, aufgeteilt. Da die beiden Rotorseiten über die Welle, falls zweckmäßig weitgehend torsionssteif, miteinander verbunden sind und damit synchron rotieren, wird diese Konfiguration als ein beidseitiger Rotor verstanden, für den die in Zusammenhang mit Figur 10 beschriebenen Eigenschaften ebenfalls gelten. Ebenfalls als beidseitiger Rotor wird eine Baugruppe verstanden, die aus zwei einseitigen Rotoren derart zusammengefügt wird, dass die beiden Rotoren im Betrieb weitgehend die gleiche Orientierung aufweisen.

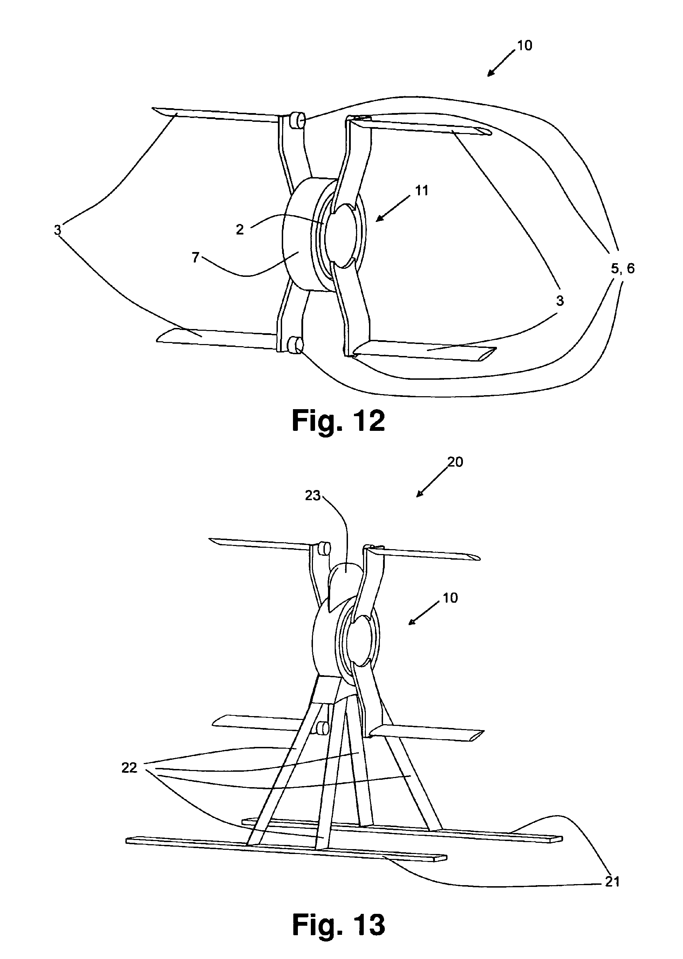

In Figur 12 ist eine weitere Ausführungsform eines Wellenenergiekonverters 10 mit beidseitigem Rotor 10 dargestellt. Hierbei handelt es sich um eine bevorzugte Ausführung, bei der der Energiewandler als direktgetriebenen Generator 11 realisiert ist, der als integraler Bestandteil des Wellenenergiekonverters 10 mit seinem Ständer das drehfest gehaltene Gehäuse 7 des Wellenenergiekonverters bildet und bei dem die Kopplungskörper 3 über Hebelarme direkt an den als Rotorbasis 2 wirkenden Läufer 2 des Generators 11 gekoppelt sind. Damit bildet der Wellenenergiekonverter 10 dieser Ausprägung eine besonders kompakte Bauform, bei der durch Verzicht auf eine Welle 9 Strukturkosten minimiert werden. Auch diese Ausführungsform ist mit den zuvor beschriebenen Ausführungsformen und Betriebsstrategien kombinierbar.

In Figur 13 ist ein Wellenenergiekonverter 20 dargestellt, der neben einem Wellenenergiekonverter 10 gemäß Figur 12 weitere Elemente enthält. Dabei handelt es sich im Einzelnen um Dämpfungsplatten 21, die über einen Rahmen 22 weitgehend starr mit dem Gehäuse 7 bzw. einem Ständer eines direktgetriebenen Generators verbunden sind. Die Dämpfungsplatten 21 befinden sich in größeren Wassertiefen als der Rotor. In diesen größeren Wassertiefen ist die durch die Wellenbewegung verursachte Orbitalbewegung der Wassermoleküle deutlich reduziert, so dass die Dämpfungsplatten 21 zu einer Abstützung bzw. Stabilisierung des Wellenenergiekonverters 20 führen. Dabei kann im Betrieb zusätzlich eine Stabilisierung des Wellenenergiekonverters 20 gemäß der oben beschriebenen Strategien mit einer gezielten Beeinflussung der resultierenden Rotorkraft überlagert werden.

Eine derartige Stabilisierung ist vorteilhaft, um die Rotationsachse in erster Näherung stationär zu halten. Ohne eine derartige Stabilisierung würden die Rotorkräfte dazu führen, dass die Rotationsachse im Extremfall unter einem Phasenversatz mit der Orbitalströmung orbitieren würde, wodurch sich die Anströmverhältnisse der Kopplungskörper 3 fundamental verändern würden. Die Funktionalität des Wellenenergiekonverters würde hierdurch negativ beeinflusst. Es sei jedoch zu verstehen gegeben, dass ein Wellenenergiekonverter auch durch andere Mittel, die keine Dämpfungsplatten umfassen müssen, entsprechend stabilisiert werden kann.

Beispielhaft sind die beiden Dämpfungsplatten horizontal dargestellt. Es werden jedoch auch Konfigurationen als vorteilhaft angesehen, bei denen die Dämpfungsplatten anders orientiert sind. Beispielsweise könnten beide Platten gegensätzlich um 45° verkippt angeordnet werden, so dass sie miteinander einen 90°-Winkel einschließen. Andere Konfigurationen sind für den Fachmann herleitbar. Auch können andere Dämpfungsplattengeometrien und/oder - anzahlen eingesetzt werden.

Darüber hinaus kann vorgesehen sein, dass die Dämpfungsplatten 21 in ihrem Winkel und/oder in ihrer Dämpfungswirkung verstellbar sind. Die Beeinflussung der Dämpfungswirkung kann beispielsweise durch eine Änderung der Fluiddurchlässigkeit erreicht werden. Auch durch eine unter Umständen zyklisch veränderte Dämpfung lässt sich das Antwortverhalten des Wellenenergiekonverters 20 auf die eingeleiteten Kräfte beeinflussen.

Neben den Dämpfungsplatten 21 kann ein hydrostatisches Auftriebssystem 23 vorgesehen sein, durch das die Tauchtiefe des Wellenenergiekonverters, beispielsweise durch Ein- und Auspumpen eines Fluids, eingestellt werden kann. Dabei ist der Auftrieb für einen stationären Fall so eingestellt, dass er die Gewichtskraft der Maschine und des Moorings abzüglich des durch das Eintauchen in Wasser herrschenden Auftriebs ausgleicht. Da die rotierenden Teile des Rotors 10 vorzugsweise einen weitgehend neutralen Auftrieb aufweisen, müssen damit im Wesentlichen die Gewichtskräfte von Gehäuse, Rahmen, Dämpfungsplatten und einer unten erläuterten Mooringeinrichtung berücksichtigt werden.

Durch kleine Änderungen des Auftriebs kann insbesondere in Verbindung mit einem sogenannten Catenery-Mooring die Tauchtiefe leicht reguliert werden, beispielsweise um die Maschine durch Verlagerung in größere Wassertiefen vor zu großen Wellenzuständen mit zu hohen Energiegehalten zu schützen oder um sie für Wartungsfälle an die Oberfläche zu befördern.

In dem Gehäuse des Auftriebssystems 23 kann zudem auch die Maschinensteuerung des Wellenenergiekonverters 20 untergebracht sein. Alternativ zu einem beidseitigen Rotor 10 können im Übrigen auch einseitige Rotoren 1 zum Einsatz kommen.

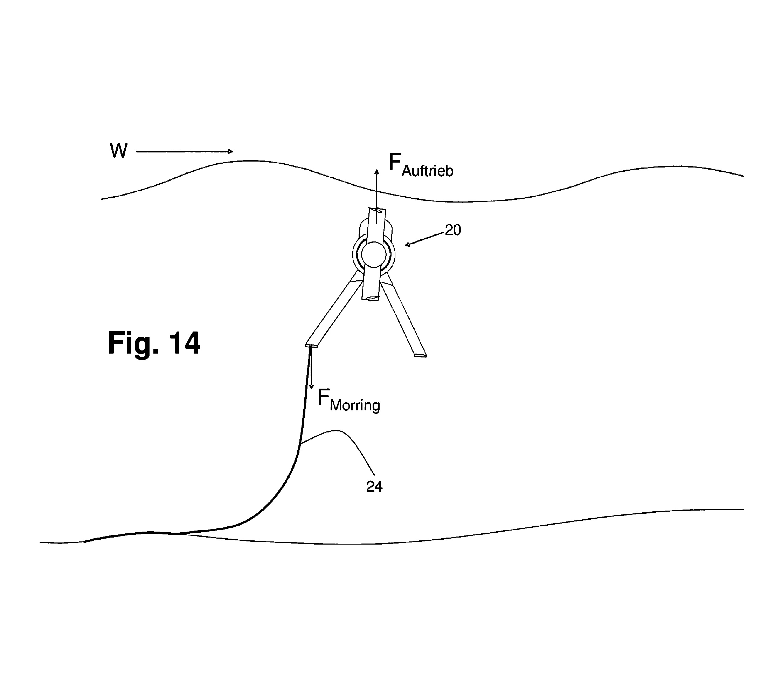

In Figur 14 ist der Wellenenergiekonverter 20 aus Figur 13 in einem Körper aus welligem Wasser mit einer Verankerung 24 am Meeresgrund, die vorzugsweise über ein Mooring, insbesondere über ein Catenery-Mooring erfolgt, alternativ aber auch als starre Verankerung ausgeführt sein kann, dargestellt. Eine Wellenausbreitungsrichtung ist mit W bezeichnet. Der Wellenenergiekonverter 20 ist über eine oder mehrere Ketten und entsprechende Anker mit dem Meeresgrund verbunden. Entsprechende Moorings sind typischerweise aus Metallketten gebildet und können insbesondere im ihrem oberen Bereich auch mindestens ein Kunststoffseil beinhalten.

Das wellenenergiekonverterseitige Ende des Moorings ist am der einlaufenden Welle zugewandten Teil des Rahmens 22 und/oder der der einlaufenden Welle zugewandten Dämpfungsplatte 21 befestigt. Dadurch erfolgt bereits eine gewisse Selbstausrichtung des Wellenenergiekonverters zur Wellenausbreitungsrichtung (Wetterfahneneffekt). Diese kann durch entsprechende zusätzliche passive (Wetterfahne) und/oder aktive Systeme (Rotorsteuerung, Azimutnachführung) unterstützt werden.

Die Kombination aus Auftrieb und Verankerung kann darüber hinaus besonders vorteilhaft als Abstützung für das Generatormoment genutzt werden. Dargestellt sind ebenfalls die durch diese beiden Systeme verursachten Kräfte F_{Mooring} (weitgehend nach unten gerichtet) und F_{Auftrieb} (weitgehend nach oben gerichtet). Bei Abgriff eines Drehmoments durch den Widerstand wird in der dargestellten Konfiguration eine Rotation des Wellenenergiekonverters 20 im Uhrzeigersinn induziert (in Rotationsrichtung des Rotors 10). Die beiden dargestellten Kräfte erzeugen ein dieser Rotation entgegen gerichtetes Drehmoment, das mit steigender Verkippung des Wellenenergiekonverters 20 ansteigt. Zusätzlich kann eine Verkippung der Maschine durch Entnahme eines Generatormoments zu einem Anheben des Moorings führen, wodurch F_{Mooring} ansteigt. Dies wirkt sich erhöhend auf das abstützende Gegenmoment aus. Zusätzlich kann auch der Auftrieb aktiv verändert werden, um das Gegenmoment zur Stabilisierung des Wellenenergiekonverters weiter zu erhöhen.

In Figur 15 ist ein Wellenenergiekonverter 30 mit drei (Teil-)Wellenenergiekonvertern 1 mit einseitigen (Teil-)Rotoren gemäß Figur 6 dargestellt. Dabei sind die (Teil-) Wellenenergiekonverter mit weitgehend paralleler Rotorachse in einem horizontal orientierten Rahmen 31 montiert, so dass die Rotoren unterhalb der Wasseroberfläche angeordnet sind und ihre Rotorachsen weitgehend senkrecht zur einlaufen Welle orientiert sind. In dem dargestellten Fall entspricht der Abstand vom ersten bis zum letzten Rotor in etwa der Wellenlänge der Meereswelle so dass für den angenommenen Fall einer monochromatischen Welle der vorderste und der hinterste Rotor die gleiche Orientierung aufweisen, währende der mittlere Rotor um 180° verdreht ist. Dabei rotieren alle drei Rotoren entgegengesetzt zum Uhrzeigersinn, die Welle läuft also von hinten über die Maschine. Wellenlängen von Meereswellen liegen zwischen 40 m und 360 m, wobei typische Wellen Wellenlängen von 80 m bis 200 m aufweisen.

Da die Rotoren jeweils aus verschiedenen Richtungen angeströmt werden - ihre Position unter der Welle ist unterschiedlich - ergibt sich an jedem Rotor eine spezifische Ausprägung der Richtung der jeweiligen Rotorkraft. Dieser Effekt kann genutzt werden, um den Wellenenergiekonverter 30 zu stabilisieren, indem die einzelnen Rotoren 1 unter Beibehaltung einer weitgehenden Synchronität durch Verstellung des Widerstands und/oder der Anstellwinkel γ, ß und/oder d derart gesteuert/geregelt werden, dass die resultierenden Rotorkräfte der Rotoren 1 sich gegenseitig weitgehend aufheben.

An dem Rahmen 31 und/oder den Rotoren sind vorteilhafterweise mehrere Auftriebssysteme 23 angebracht, mit Hilfe derer die Tauchtiefe reguliert werden kann sowie durch die zusammen mit der nicht dargestellten Verankerung (diese greift vorzugsweise am der einlaufenden Welle zugewandten Teil des Rahmens 31 an und kann beispielsweise als Mooring, insbesondere als Catenery-Mooring ausgeführt sein) ein das Dämpfungsmoment abstützendes Gegenmoment erzeugt werden kann.

Dabei kann der Rahmen 31 so ausgeführt sein, dass der Abstand zwischen den Rotoren 1 einstellbar ist, so dass die Maschinenlänge auf die aktuelle Wellenlänge abgestimmt werden kann. Es werden jedoch auch Maschinen erwogen, die deutlich länger als eine Wellenlänge ausgebildet sind und eine andere Anzahl an Rotoren aufweisen, was zu einer weiteren Verbesserung der Maschinenstabilität durch die Überlagerung der eingeleiteten Kräfte führt.

Zusätzlich können zur weiteren Stabilisierung Dämpfungsplatten vorgesehen sein, die in größerer Wassertiefe angeordnet sein können. Ebenfalls zur weiteren Stabilisierung der Anlage, insbesondere gegenüber einer Rotation um die Längsachse, könnten Auftriebssysteme an mindestens einem Querträger angeordnet sein. Ein solcher, vorzugsweise horizontal orientierter, Querträger kann beispielsweise am hinteren Ende des Rahmens angeordnet sein.

Weiterhin kann vorgesehen sein, dass der Rahmen 31 des Wellenenergiekonverters als schwimmender Rahmen ausgeführt ist und dass die getaucht unter der Wasseroberfläche angeordneten Rotoren 1 mit weitgehend horizontaler Rotorachse über eine entsprechend ausgeführte Rahmenkonstruktion drehbar an dem schwimmenden Rahmen gehaltert sind.

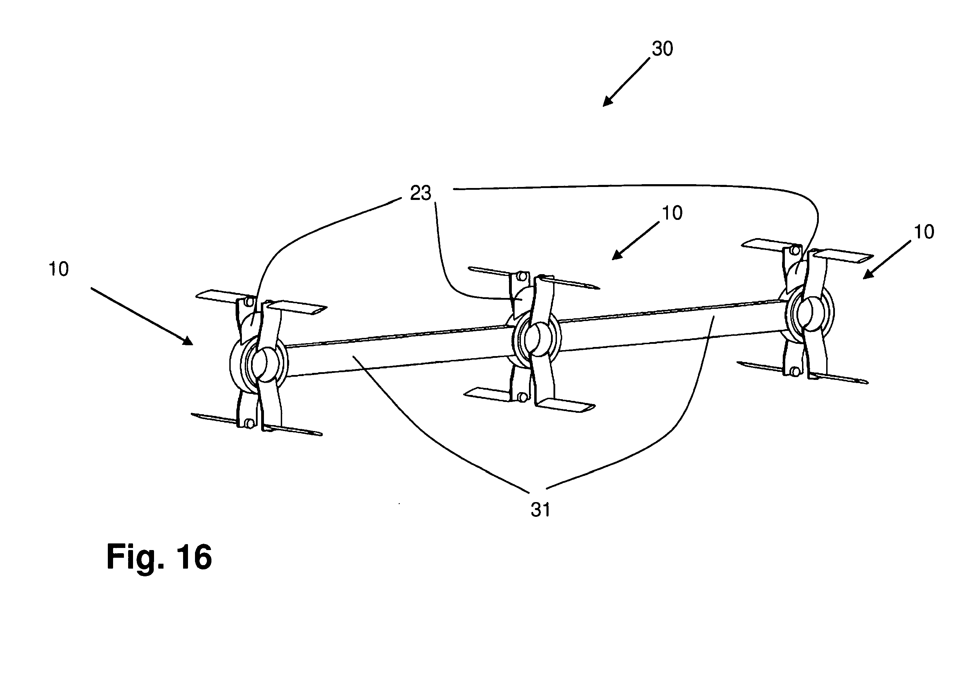

Figur 16 zeigt eine alternative Ausführung eines vorteilhaften Wellenenergiekonverters 30 mit weitgehend horizontaler Rahmenerstreckung und einer Mehrzahl von beidseitigen Rotoren. Im Vergleich zu einer Anordnung mit einseitigen Rotoren ist dies ist eine besonders vorteilhafte Ausführungsform, da dadurch die Anzahl der Generatoren reduziert wird.

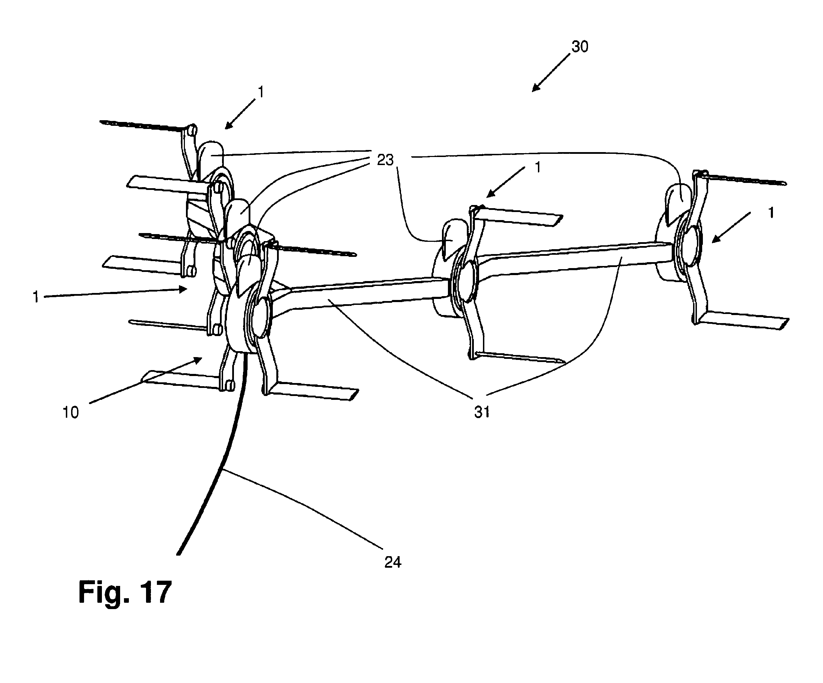

Figur 17 zeigt eine weitere alternative Ausführung eines vorteilhaften Wellenkonverters 30 mit einer Kombination aus einem beiseitigen Rotor und einer Mehrzahl an einseitigen Rotoren und einer weitgehend horizontalen Rahmenerstreckung. Dabei ist der Rahmen 31 als V ausgeführt, um eine Abschattung zwischen den verschiedenen Rotoren zu vermeiden und/oder zu minimieren.

Ebenfalls dargestellt ist eine Verankerung 24, die vorzugsweise an der Spitze der V-förmigen Anordnung angreift, so dass sich der Wellenenergiekonverter 30 durch Wetterfahneneffekte vorzugsweise weitgehend selbstständig so zur Welle ausrichtet, so dass er von dieser von vorne angeströmt wird. Dadurch erfolgt bereits eine weitgehend senkrechte Anströmung der Rotorachsen, die beispielsweise durch die Beeinflussung der Rotorkräfte noch weiter optimiert werden kann.

Die vorzugsweise vorhandenen Auftriebssysteme können bereits ein Gegendrehmoment erzeugen, es ist aber auch eine Einbeziehung der Verankerungskräfte des Mooringsystems 24 möglich, wie es im Zusammenhang mit Figur 14 beschrieben wurde. Zur Stabilisierung des Rahmens können zusätzlich Abspannungen und/oder Verstrebungen vorgesehen sein. Zudem kann auch eine Stabilisierung durch den Einsatz von Dämpfungsplatten ähnlich wie in Figur 13 vorgesehen sein.

Auch der Wellenenergiekonverter 30 gemäß den Figuren 15 bis 17 kann durch Beeinflussung der Rotorkräfte der einzelnen Rotoren in seiner Position und in seinem Bewegungsverhalten beeinflusst werden. Insbesondere ist dabei auch eine Drehung um die vertikale Achse möglich, wenn die verschiedenen Rotoren entsprechend gesteuert/geregelt werden.

Neben einer Stabilisierung durch die Rotorkräfte erfolgt zusätzlich auch noch eine Stabilisierung des Wellenenergiekonverters 30 durch die am Rahmen 31 angreifenden strömungsinduzierten Kräfte. Auch diese sind in verschiedene Richtungen gerichtet und können sich mindestens teilweise ausgleichen.

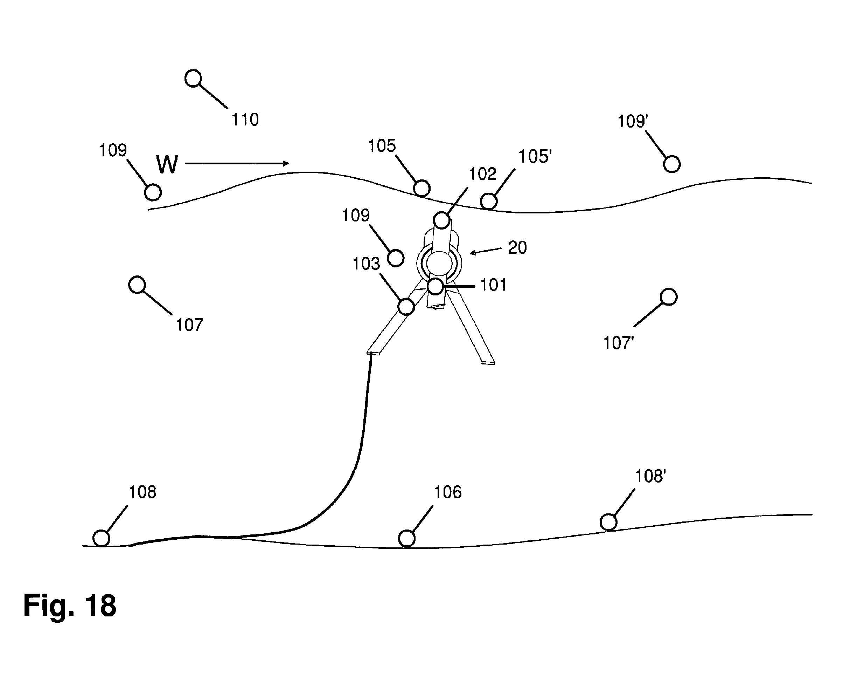

Figur 18 zeigt unterschiedliche bevorzugte Sensorpositionen zur Anbringung von Sensoren zur Bestimmung der Strömungsverhältnisse an einem Wellenenergiekonverter 20 und besonders bevorzugt zur Bestimmung der lokalen Anströmungsverhältnisse an den Kopplungskörpern eines Wellenenergiekonverters. Darüber hinaus lässt sich mit auf dem Wellenenergiekonverter 20 angebrachten Sensoren auch dessen Bewegungsverhalten bestimmen. Eine Wellenausbreitungsrichtung ist mit W bezeichnet.

Zur Erreichung der geforderten Synchronität und/oder der gezielten Beeinflussung der Rotorkräfte ist die Kenntnis der Anströmungsverhältnisse an den Kopplungskörpern, dabei insbesondere die lokale Strömungsgeschwindigkeit und -richtung vorteilhaft. Hierzu können Sensoren auf dem Rotor (Position 101) und/oder auf den Kopplungskörpern (Position 102) und/oder auf dem Rahmen (Position 103) und/oder unter der Wasseroberfläche schwimmend in Maschinennähe (Position 104) und/oder auf der Wasseroberfläche in Maschinennähe (Position 105) und/oder auf dem Meeresgrund unterhalb der Maschine (Position 106) und/oder unter der Wasseroberfläche schwimmend der Maschine (oder einem Park aus mehreren Maschinen) vorgelagert (Position 107) und/oder auf dem Meeresgrund der Maschine (oder einem Park aus mehreren Maschinen) vorgelagert (Position 108) und/oder schwimmend der Maschine (oder einem Park aus mehreren Maschinen) vorgelagert (Position 109) und/oder oberhalb der Wasseroberfläche (Position 110) - zum Beispiel in einem Satelliten - angeordnet sein. Zusätzliche Sensoren 105' bis 109' können, bezogen auf die Wellenausbreitungsrichtung, leeseitig angeordnet sein. Derartige leeseitige Sensoren ermöglichen die Bestimmung einer Interaktion des Wellenenergiekonverters mit den eingegangen Wellen. Auf Grund dieser Kenntnis kann das Ergebnis der Interaktion überprüft und ggf. die Interaktion zielgerichtet über eine Maschinensteuerung verändert werden.

Hierbei können Sensoren und entsprechende Kombinationen, unter anderem aus folgenden Klassen, zum Einsatz kommen:
- Drucksensoren (zur Differenz- und/oder Absolutdruckbestimmung) zur Bestimmung von hydrostatischen und/oder hydrodynamischen Drücken,
- Ultraschallsensoren zur Bestimmung von Strömungsgeschwindigkeiten, vorteilhafterweise in mehreren Dimensionen,
- Lasersensoren zur Bestimmung von Strömungsgeschwindigkeiten und/oder einer Geometrie einer Wasseroberfläche,
- Beschleunigungssensoren zur Bestimmung von Strömungsverhältnissen und/oder von Bewegungen des Gesamtsystems und/oder des Rotors und/oder der Oberflächengeschwindigkeiten eines Wasserkörpers und/oder zur Bestimmung der Ausrichtung eines Körpers über die Detektion des Erdschwerefeldes,
- Inertialsensoren zur Messung unterschiedlicher translatorischer und/oder rotatorischer Beschleunigungskräfte,
- Massenstrommesser/Durchflusssensoren und Hitzdrahtanemometer zur Bestimmung einer Strömungsgeschwindigkeit,
- Biegewandler zur Bestimmung einer Strömungsgeschwindigkeit,
- Dehnungssensoren zur Bestimmung der Verformung der Kopplungskörper,
- Anemometer zur Bestimmung einer Strömungsgeschwindigkeit,
- Winkelsensoren (absolut oder inkrementell), Tachometer zur Bestimmung von Anstellwinkel der Kopplungskörper und/oder des Drehwinkels des Rotors,
- Drehmomentsensoren zur Bestimmung der Verstell- und/oder Haltekräfte des Kopplungskörperverstellsystems,
- Kraftsensoren zur Bestimmung der Rotorkraft hinsichtlich Betrag und Richtung,
- Satelliten zur Bestimmung der Oberflächengeometrie des Ozeangebiets,
- GPS-Daten zur Bestimmung von Maschinenposition und/oder -bewegung,
- Gyroskope zur Bestimmung einer Drehrate.

Aus diesen Sensorsignalen lassen sich die momentanen lokalen Anströmbedingungen der Kopplungskörper und/oder das Strömungsfeld um die Maschine und/oder das auf die Maschine/den Park aus mehreren Maschinen zulaufende Strömungsfeld und/oder die Eigenschwingungen der Maschine insbesondere prädiktiv ermitteln, so dass das zweite Bremsmoment und/oder die Anstellwinkel γ, β und/oder d der Kopplungskörper 3 zur Erreichung der Steuer-/Regelziele in geeigneter Weise eingestellt werden können.

Zu den Steuer-/Regelzielen gehören neben einer Optimierung des Rotormoments insbesondere die Einhaltung einer Synchronität und/oder die Vermeidung eines Strömungsabrisses an den Kopplungskörpern und/oder die Beeinflussung der Rotorkräfte zu einer Stabilisierung und/oder einer Verschiebung und/oder einer gezielten Schwingungsanregung und/oder einer Drehung der Anlage zur lagerichtigen Ausrichtung zur einlaufenden Welle. Ferner können über die Steuerung/Regelung mit einer Veränderung des mindestens einen Auftriebssystems auch die Tauchtiefe sowie auch das Abstützmoment beeinflusst werden. Über eine Anpassung des Dämpfungsplattenwiderstands kann das Maschinenschwingverhalten ebenfalls beeinflusst werden.

Besonders vorteilhaft erscheinen dabei Messungen des Strömungsfeldes, die bereits vor der Maschine oder einem Park aus mehreren Maschinen erfolgen und aus denen das zu einem späteren Zeitpunkt an der/den Maschinen anliegende Strömungsfeld berechnet werden kann. Zusammen mit einem virtuellen Modell der Maschine kann daraus eine Vorsteuerung der Stellgrößen abgeleitet werden, die dann durch eine Regelung angepasst wird. Durch ein derartiges Vorgehen wird es insbesondere möglich, in multichromatischen Seegangszuständen die wesentlichen energietragenden Wellenanteile rechnerisch zu erfassen und die Steuerung/Regelung des Energiekonverters in geeigneter Weise auf diese abzustimmen.

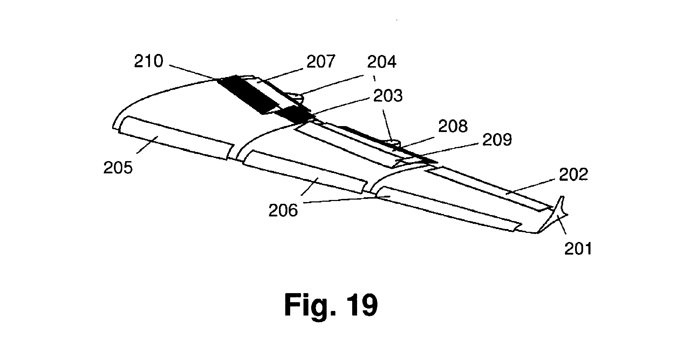

In Figur 19 sind aus dem Flugzeugbau bekannte alternative Möglichkeiten, insbesondere Klappen, zu einer Änderung des Anstellwinkels γ eines Auftriebsläufers und/oder seiner Form dargestellt und mit 201 bis 210 bezeichnet, mit denen sich die Umströmung und damit Auftriebs- und/oder Widerstandskräfte beeinflussen lassen. Es kann vorgesehen sein, die Kopplungskörper 3 zusätzlich oder alternativ zu einer Aktorik zur Verstellung der Anstellwinkels γ, β und/oder d mit einer oder mehrerer dieser Mittel auszustatten.

Dabei wird insbesondere der Einsatz von sogenannten Winglets zur Beeinflussung des Auftriebsverhaltens an den freien Flügelenden erwogen. Alternativ ist es auch möglich, die freien Flügelenden mit einer zweiten Rotorbasis zu versehen, und so auch die mechanische Stabilität des Gesamtsystems zu erhöhen.

In den Abbildungen wurden der Einfachheit halber symmetrische Profile verwendet. Hier sei ausdrücklich darauf hingewiesen, dass auch gekrümmte Profile eingesetzt werden können. Darüber hinaus können die eingesetzten Profile in ihrer Krümmung an die Strömungsbedingungen (gekrümmte Strömung) angepasst werden.

## Patentansprüche

1. Verfahren zum Betreiben eines Wellenenergiekonverters (1, 10, 20, 30) zur Umwandlung von Energie aus einer Wellenbewegung eines Fluids in eine andere Energieform, mit wenigstens einem Rotor und wenigstens einem mit dem wenigstens einen Rotor gekoppelten Energiewandler (8), wobei durch die Wellenbewegung ein auf den wenigstens einen Rotor wirkendes erstes Drehmoment und durch den wenigstens einen Energiewandler (8) ein auf den wenigstens einen Rotor wirkendes zweites Drehmoment erzeugt wird, wobei eine erwünschte, senkrecht zu einer Rotationsachse des wenigstens einen Rotors wirkende Effektivkraft durch Einstellen des ersten und/oder zweiten Drehmoments eingestellt wird.

2. Verfahren nach Anspruch 1, wobei die Wellenbewegung eine Orbitalströmung ist und eine Rotationsbewegung des wenigstens einen Rotors um die Rotorachse durch gezieltes Einstellen des ersten und/oder zweiten Drehmoments weitgehend oder vollständig mit der Orbitalströmung synchronisiert wird.

3. Verfahren nach Anspruch 2, wobei ein Phasenwinkel zwischen der Orbitalströmung und der Rotationsbewegung des wenigstens einen Rotors auf einen Wert oder innerhalb eines Wertebereichs eingestellt oder geregelt wird.

4. Verfahren nach einem der vorstehenden Ansprüche, wobei wenigstens ein mit dem wenigstens einen Rotor verbundener Kopplungskörper (3) verwendet wird, um aus der Wellenbewegung durch Erzeugen einer hydrodynamischen Auftriebskraft das erste Drehmoment zu erzeugen, wobei insbesondere Betrag und/oder Richtung der hydrodynamischen Auftriebskraft durch Verändern einer Stellung und/oder einer Form des wenigstens einen Kopplungskörpers (3) eingestellt wird.

5. Verfahren nach einem der vorstehenden Ansprüche, wobei durch den wenigsten einen Energiewandler (8) zumindest zeitweise ein Brems- oder Beschleunigungsmoment als zweites Drehmoment auf den wenigstens einen Rotor aufgebracht wird.

6. Verfahren nach einem der vorstehenden Ansprüche, wobei das erste und/oder das zweite Drehmoment zyklisch, jeweils insbesondere einer Frequenz der Wellenbewegung und/oder einer Rotationsbewegung des wenigstens einen Rotors entsprechend, verändert wird, wobei die Effektivkraft eine im zeitlichen Mittel aus einer auf eine Haltestruktur des wenigstens einen Rotors wirkenden Reaktionskraft resultierende Kraft ist.

7. Verfahren nach Anspruch 6, wobei das erste Drehmoment innerhalb eines oder mehrerer Winkelpositionsintervalle einer Rotationsbewegung des wenigstens einen Rotors weitgehend synchron mit dem zweiten Drehmoment erhöht bzw. verringert wird.

8. Verfahren nach einem der vorstehenden Ansprüche, wobei durch die erzeugte Effektivkraft eine Position des Wellenenergiekonverters (1, 10, 20, 30) in dem Fluid in lateraler und/oder vertikaler Richtung verändert und/oder der Wellenenergiekonverter in dem Fluid lateral und/oder vertikal ausgerichtet und/oder gedreht wird und/oder einer auf den Wellenenergiekonverter (1, 10, 20, 30) wirkenden Kraft, insbesondere aufgrund von weitgehend kontinuierlichen Fluidströmungen, entgegen gewirkt, und/oder der Wellenenergiekonverter (1, 10, 20, 30) stabilisiert und/oder ein Bewegungszustand des Wellenenergiekonverters (1, 10, 20, 30) gezielt geändert wird.

9. Verfahren nach einem der vorstehenden Ansprüche, wobei lokale, regionale und/oder globale Anströmbedingungen des Fluids bezüglich des Wellenenergiekonverters (1, 10, 20, 30) und/oder seiner Komponenten und/oder eine Ausrichtung des Wellenenergiekonverters (1, 10, 20, 30) und/oder ein Bewegungszustand des Wellenenergiekonverters (1, 10, 20, 30) und/oder ein Phasenwinkel zwischen einer Orbitalströmung und einer Rotationsbewegung des wenigstens einen Rotors, insbesondere zeitlich, als Betriebsbedingungen erfasst und zur Einstellung des ersten und/oder zweiten Drehmoments herangezogen werden.

10. Verfahren nach Anspruch 9, wobei multichromatische Schwankungen der Betriebsbedingungen erfasst und insbesondere Hauptmoden in den multichromatischen Schwankungen zur Einstellung des ersten und/oder zweiten Drehmoments herangezogen werden.

11. Verfahren nach einem der vorstehenden Ansprüche, wobei mehrere Rotoren verwendet werden und jeweils eine gleiche oder abweichende Effektivkraft erzeugt wird.

12. Wellenenergiekonverter (1, 10, 20, 30) zur Umwandlung von Energie aus einer Wellenbewegung eines Fluids in eine andere Energieform, mit wenigstens einem Rotor und wenigstens einem mit dem wenigstens einen Rotor gekoppelten Energiewandler (8), wobei der wenigstens eine Rotor dazu eingerichtet ist, durch die Wellenbewegung ein auf den wenigstens einen Rotor wirkendes erstes Drehmoment zu erzeugen, wobei der wenigstens eine Energiewandler (8) dazu eingerichtet ist, ein auf den wenigstens einen Rotor wirkendes zweites Drehmoment zu erzeugen, mit einer Steuereinrichtung, die dazu eingerichtet ist, durch entsprechende Ansteuerung des Wellenenergiekonverters (1, 10, 20, 30) das erste und/oder zweite Drehmoment so einzustellen, dass eine erwünschte, senkrecht zu einer Rotationsachse des wenigstens einen Rotors wirkende Effektivkraft eingestellt wird.

13. Wellenenergiekonverter (1, 10, 20, 30) nach Anspruch 12, wobei die Steuereinrichtung dazu eingerichtet ist, ein Verfahren nach einem der Verfahrensansprüche durchzuführen.

14. Wellenenergiekonverter (1, 10, 20, 30) nach Anspruch 12 oder 13, wobei der wenigstens eine Rotor wenigstens einen Kopplungskörper (3) aufweist, um aus der Wellenbewegung durch Erzeugen einer hydrodynamischen Auftriebskraft das erste Drehmoment zu erzeugen, wobei die Steuereinrichtung insbesondere dazu eingerichtet ist, Betrag und/oder Richtung der hydrodynamischen Auftriebskraft durch Verändern einer Stellung und/oder einer Form des wenigstens einen Kopplungskörpers (3) einzustellen.

15. Wellenenergiekonverter (1, 10, 20, 30) nach Anspruch 14, wobei der wenigstens eine Kopplungskörper (3) an wenigstens einer Rotorbasis (2) von der Rotationsachse des wenigstens einen Rotors beabstandet angebracht ist.

16. Wellenenergiekonverter (10, 20, 30) nach einem der vorstehenden Vorrichtungsansprüche, wobei der wenigstens eine Rotor (10) eine bezüglich seiner Rotationsebene zweiseitige Rotorbasis (2) und jeweils wenigstens einen Kopplungskörper (3) auf jeder Seite der Rotorbasis (2) aufweist.

17. Wellenenergiekonverter (10, 20, 30) nach Anspruch 16, wobei Mittel (5) zur unabhängigen oder gemeinsamen Verstellung der Kopplungskörper (3) vorgesehen sind.

18. Wellenenergiekonverter (1, 10, 30) nach einem der vorstehenden Vorrichtungsansprüche, wobei der wenigstens eine Rotor wenigstens zwei Rotorbasen (2) und wenigstens einen zwischen jeweils zwei Rotorbasen (2) angebrachten Kopplungskörper (3) aufweist.

19. Wellenenergiekonverter (1, 10, 20, 30) nach einem der vorstehenden Vorrichtungsansprüche, wobei der wenigstens eine Energiewandler (8) als direktgetriebener Generator (11) ausgebildet ist, wobei der wenigstens eine Rotor der Antrieb des Generators ist.

20. Wellenenergiekonverter (1, 10, 20, 30) nach Anspruch 19, wobei der Läufer des direktgetriebenen Generators (11) die Rotorbasis (2) des wenigstens einen Rotors bildet.

21. Wellenenergiekonverter (1, 10, 20, 30) nach einem der vorstehenden Vorrichtungsansprüche, der wenigstens einen Stabilisierungsrahmen (22) und/oder Dämpfungsplatten (21) zur Stabilisierung des Wellenenergiekonverters (1, 10, 20, 30), Verankerungsmittel (24) zur Verankerung des Wellenenergiekonverters (1, 10, 20, 30) und/oder Drehmomentabstützmittel zur Aufnahme eines Drehmoments aufweist.

22. Wellenenergiekonverter (1, 10, 20, 30) nach einem der vorstehenden Vorrichtungsansprüche, der mehrere an einer länglichen, insbesondere V-förmigen Struktur (31) angebrachte ein- und/oder zweiseitige Rotoren aufweist.

23. Wellenenergiekonverter (1, 10, 20, 30) nach einem der vorstehenden Vorrichtungsansprüche, der Mittel (23) zur Veränderung einer hydrostatischen Auftriebskraft aufweist, die insbesondere zur Einstellung einer Tauchtiefe und/oder zum Verkippen des Wellenenergiekonverters (1, 10, 20, 30) in dem Fluid und/oder zur Beaufschlagung des Wellenenergiekonverters (1, 10, 20, 30) mit einem Drehmoment eingerichtet sind.

24. Wellenenergiekonverter (1, 10, 20, 30) nach einem der vorstehenden Vorrichtungsansprüche, der zumindest einen Sensor und/oder zumindest ein Sensorsystem zur Bestimmung einer Rotor- und/oder Kopplungskörperstellung und/oder eines Phasenwinkels zwischen einer Orbitalströmung und einer Rotationsbewegung des wenigstens einen Rotors und/oder eines Betriebszustands des Wellenenergiekonverters (1, 10, 20, 30) und/oder eines Wellenzustands, insbesondere einer Wellenhöhe, einer Wellenlänge, einer Wellenfrequenz, einer Wellenausbreitungsrichtung und/oder einer Wellenausbreitungsgeschwindigkeit, und/oder eines Strömungsfelds und/oder einer Anströmrichtung aufweist, wobei der zumindest eine Sensor und/oder das zumindest eine Sensorsystem an dem Wellenenergiekonverter (20, 30), in seiner Umgebung und/oder entfernt hiervon angeordnete Sensoren aufweist.
